# EUROPEAN PATENT SPECIFICATION

(11) **EP 1 590 555 B1**
(45) Date of publication and mention of the grant of the patent: **08.12.2010**
(21) Application number: 03757552.9
(22) Date of filing: 09.10.2003
(51) Int. Cl.: F01N 3/00

(54) **COMBUSTION PROCESS**
VERBRENNUNGSVERFAHREN
PROCEDE DE COMBUSTION

(30) Priority: 10.10.2002 WO PCT/BE02/00156
(43) Date of publication of application: 02.11.2005
(73) Proprietor: Bosteels, Dominique, Co Cork (IE)
(72) Inventor: Bosteels, Dominique, Co Cork (IE)
(74) Representative: Powis de Tenbossche, Roland
(86) International application number: PCT/BE2003/000170
(87) International publication number: WO 2004/033867

(56) References cited:
- EP-A- 0 006 687
- EP-A- 0 461 347
- GB-A- 1 504 952
- US-A- 4 991 395

## Description

### Field of the invention

The present invention relates to a process of combustion of a material in presence of a catalyst so as to reduce the NOₓ emission or with a treatment step for flue gases.

### The Prior Art

It has already been proposed to use catalyst in explosion motor or in combustion chamber so as to reduce the formation of NOₓ.

As stated in Internal combustion Engine Fundamentals - J.B. Heywood - Mc Graw-Hill, 1988, "while it is not too difficult to prepare catalyst that are highly effective when fresh, it is much more difficult to maintain effectiveness over extended mileage (50,000miles)".

For example, GB 211 936 (Sokal) discloses the use of a metallic oxide in a coating applied to the wall of the combustion chamber of an internal combustion motor. The coating is for example aluminum oxide or cerium oxide, combined with a refractory and inert substance. During the working of the internal motor, the efficiency of the catalyst starts to decrease, due to loss of catalyst particles, and up build of carbon deposit, etc. After a minimal mileage, the catalyst is no longer efficient for reducing efficiently the NOₓ content of the combustion gases.

US 5,307,772 (Ford) discloses a catalyst impregnated prechamber insert operating in fuel rich environments of internal combustion engines. The insert is comprised of a ceramic impregnated with a catalyst for reducing the formation of NOₓ. During the working of the engine, the efficiency of the catalyst starts to decrease, whereby after a certain mileage, the impregnated ceramic has a low efficiency or has no efficiency.

US 4,811,701 (Daimler) discloses a valve provided with a catalytic coating. During the working of the engine, the efficiency of the catalyst starts to decrease, whereby after a certain mileage, the catalyst has a low efficiency or has no efficiency.

US 5,946,917 (Siemens) discloses a catalytic combustion chamber of a burner, said combustion chamber being provided with a catalytically active coating After a certain working of the burner, the efficiency of the catalyst decreases.

US 4,844,028 (Volcher) discloses the admission of water vapor in the air admission, said humidified air contacting a lanthanide/actinide containing catalyst before being admitted in the combustion chamber of a cylinder. The NOₓ reduction efficiency is low for a mileage of 0 to 5,000 km and reaches thereafter an efficiency varying greatly. Even if some lanthanide/actinide could possibly coat wall of the combustion chamber, said coating has an efficiency which is quite variable, whereby the NO_{X} reducing effect is variable.

GB 1,504,952 discloses a method and an apparatus for reducing pollution. In said method, water vapor is admitted in the air intake venturi, before the throttle valve. A cerium screen is placed adjacent to the throttle valve. According to said patent, the introduction of steam into the intake manifold of an internal combustion engine results in almost complete absence of nitrogen oxides and carbon monoxide in the exhaust gases. As stated in said document, the efficiency of reduction of pollution is more due to the water vapor admission, the cerium screen providing no extra benefit for the reduction of pollution.

US 4,991,395 (Markou) disclosed a method in which air (humidified and then heated) contacts a cerium containing catalyst, said air being added in the air admission. Due to the heating step, the air is far away from the saturation, whereby the air is poorly charged with cerium. The efficiency of a motor provided with such a device is very low for a mileage of about 5,000km, while being low thereafter. Moreover, the efficiency is quite variable and unpredictable.

A commercial system (Celcat®) using dry cerium containing powder is known. When using dry cerium containing powder, the problem of clogging exists at the place where the powder has to be admitted. Moreover, the efficiency of a motor provided with such a device is very low for a mileage of about 5,000km, while being variable, low and unpredictable thereafter. According to the commercial document of the Celcat® system, the cerium containing powder in the motor has only a cleaning effect and a carbon removal effect on the motor. No catalytic effect in the combustion was observed by using said commercial system.

As stated in EP 1 129 282 "MARKOU" (column 1, lines 13 to 15), a system sucking cerium oxide particles is subjected to fluctuations caused by the operation of the engine, the vacuum being not sufficient reliable, whereby leading to an aggravation of the exhaust behavior and of the fuel consumption. No active coating can thus be formed with the Markou system, as according to Markou, for not aggraving the exhaust behavior and the fuel consumption, the suction of cerium oxide particles has not to fluctuated.

For solving the problem of US 4,844,028, US 4,991,395 and the Celcat system (namely low and unpredictable (variable) efficiency for a mileage of about 5,000 km and highly variable efficiency thereafter), the man skilled in the art would possibly try to increase the intake of additives in the combustion chamber. However, if he had done so, he would be faced with an environmental problem namely the exhaust of a too large amount of additive particles, and with a clogging problem of particles in the combustion chamber (for example at the spark plug), said clogging problem could be a cause of problem when starting the engine.

Finally, FR 2,731,009 (Rhone Poulenc) discloses a cerium containing fuel. When using such a fuel, the NOₓ reduction efficiency is low for at least 5,000 km. The cerium particles present in the fuel have tendency to be exhausted with the combustion gases, whereby for avoiding environmental problem, specific and costly trap systems need to be used. In said document, reference is made to a corrosion pretreatment of the motor by using a cerium containing fuel. However, such a corrosion pretreatment for being effective requests a minimum mileage of about 5,000 km. Moreover, such a pretreatment step is not suitable for having an efficient cerium coating in the cylinder.

In the system proposed in FR 2,731,009; US 4,991,395; US 4,844,028 and Celcat®, if a coating appears in the combustion chamber, said coating is uncontrollable, is not uniformly distributed, whereby the efficiency varies greatly and is unpredictable. Moreover, in said system, the possible coating of the combustion chamber is a slow process, coating which is not accurate as being done in presence of a large volume of combustion gases and under variable and not controllable conditions, such as load, pressure, temperature or fuel, for example. When cerium is present in a large volume of combustion gases, the possible coating with cerium of wall of the combustion chamber is made in presence of carbon particles, whereby being removed with said carbon particles. Such a coating, when occurring, is not suitable for ensuring a stable and controllable NOₓ reduction.

The invention relates to a process suitable for solving one or more problems cited hereabove.

The invention relates thus to a process having one or more of the following advantages :
- immediate or substantially immediate NOₓ reduction due to the presence of a primary catalyst layer or coating,
- more stable NOₓ reduction rate due to the regeneration step when required
- possibility to control the quality of the primary catalyst layer or coating
- low Ce/Eu/Yb/Pr/Nd particles emission as less cerium/europium/ytterbium/praseodymium/Neodium is required for the regeneration
- possibility to have a primary coating of specific part of the combustion chamber, inlet, outlet or EGR, for example.
- possibility to make intermittent regeneration (for example no regeneration in city or in a tunnel), while ensuring a substantially constant NOₓ reduction rate
- possibility to make the primary coating under specific conditions
- easier regeneration
- possibility to reduce as low as possible the emission of cerium in the atmosphere
- better efficiency of the catalyst (less dioxin and/or less polycyclic aromatic hydrocarbon and/or less NOₓ and/or less soot and/or less HC and/or less S/SO₂/SO₃
- lesser amount of alcohol, phenol, benzyl alcohol, aldehydes, phenol like compounds in the exhausted flue gases after the treatment of the gases
- No negative influence on the working of the catalyst due to the sulfur present in the fuel,
- surface catalytic effect with volumetric catalytic effect, especially when the surface catalytic effect has to be regenerated
- possibly to use multi ignition system
- no soot deposit in the combustion chamber
- possibility to ensure or to control a multi spot or local deflagration or combustion
- better admission of air in the combustion chamber, less pumping resistance, whereby enabling a downsizing of the combustion chamber for a given power better removal of the exhaust gases
- admission of cerium and/or europium and/or ytterbium and/or praseodymium in the volume of the combustion chamber only when required, whereby reducing the consumption of cerium, moreover, the amount of cerium and/or europium and/or ytterbium and/or praseodymium added in the volume of the combustion chamber is an amount only required for regeneration of the activity of the surface catalyst
- longer time efficiency of the exhaust catalyst, for example of a three ways catalyst
- lower exhaust temperature (for example a temperature from 50 to 100°C lower than the temperature of the flue gases of a combustion chamber not provided with a catalytic coating)
- possibility to control the combustion process at high rotation speed no more requiring a high CO content in the flue gases (more than 3%, such as 5%)
- No Carbon deposit at the admission opening of the exhaust gas recirculation (EGR), especially at the control valve thereof
- better control of the EGR
- No carbon deposit in the inlet manifold, nor at the inlet valve
- less vibrations of the motor (in the three orthogonal directions), whereby the motor is submitted to less stresses (for example reduction of more than 15%, such as reduction of more than 30% or even of more than 40%
- excellent working of the motor, even if the used fuel is substantially free of antiknock agent and/or detergent
- enabling an autoregulating effect, for example in function of the oxygen content of the intake air
- enabling to increase the possible compression ratio for petrol, while enabling to lower the compression ratio requested for the diesel combustion
- enabling to have a lean burn combustion, while ensuring that the combustion gases are still within the working range of the converter or three-ways catalytic converter type
- reducing the necessity to use DeNOx or other gas treatment with urea or NOₓ absorber
- possibility to have efficient working with lower combustion peak pressure and lower combustion peak temperature, while inducing longer combustion time
- improving the further burning reaction (second pressure wave) of the still present fuel after the classical burning end (first pressure wave)
- enabling to have combustion conditions corresponding to a lean combustion, even if at the admission conditions correspond substantially to stoichiometric conditions, the conditions at the exhaust correspond to the conditions for a stoichiometric combustion
- higher maximum combustion pressure
- keeping a high pressure during a longer combustion period, preferably at lower temperature
- when the primary coating is sufficiently efficient, an admission of water or water vapor in the combustion chamber is advantageous
- when gas recirculation is carried out, no clogging of the recycling pipe was observed due to carbon deposit
- lower need of fuel
- less green house gases
- lower energy initiation and/or ignition,
- better reaction control, enabling oxidation of fuel and reduction of pollutants, such as noxious gases, i.e. ensuring the best oxidation of the fuel, while ensuring a good reduction of pollutants, such as noxious gases and particles
- a high availability of free electrons or ions or cations or anions, whereby ensuring a more rapid reaction and a more controlled reaction, such as a more complete reaction
- control of the combustion, so that the initial combustion condition corresponds substantially to the auto inflammation
- the primary coating has advantageously properties counteracting the deposit of carbonaceous particles, whereby avoiding the problem of clogging and whereby enabling said carbonaceous particles to be burned at least partly,
- formation of volumetric nanoparticles (La, Ce, Eu, Yb, Nd,Pr) in the combustion chamber,
- controlling the minimal inflammability temperature of the fuel or of the diesel
- better use of the energy of the fuel (for example its high energy value or heating value)
- less potential required for the ignition low electrical load on the electrical system, whereby more power available for the work efficiency
- emission of soluble gaseous compounds, especially of water soluble compounds, such as nitrate, carbonate or sulfate, for example which can easily be collected or recovered for example when damping water or a water excess, for example in the form of salts of La, Ce, Eu, Yb, Pr, Nd etc,
- reduction of the weight of the motor, while maintaining a same output or torque
- increasing the torque efficiency per unit of combustion volume or maximal combustion volume or nominal combustion volume
- enabling better or higher lean air fuel mixture at the admission, with no or substantially no knocking and without excess of unburned HC
- possibility to adapt/modify the ratio H/C of the fuel
- possibility to avoid flame quenching, whereby avoiding the formation of unburned hydrocarbon, and whereby enabling the % of EGR, for example above 30%, such as above 50% or even more,
- higher production of degenerative branching agent, whereby reducing pollutant (noxious product or solid carbon particles for example) to harmful precursors or harmful product, whereby better use of the energy content of the fuel
- possibility to reduce the length of the intake manifold and/or of the exhaust manifold
- less red hot carbon particles due to the presence of higher oxygen content at the end of the combustion
- easier cooling of the engine (refrigerant circuit, cooling of the piston by oil projection, etc.) or reduced cooling system
- possibility to use fuel free of oxygenator (MBTE) and/or free of scavenger
- possibility to reduce of more than 90% the HC,CO,NOx emission in a period of less than 3minutes when starting a cold motor with respect to a conventional motor
- possibility to have a continuous catalytic combustion, with intermittent rejuvenation or regeneration
- possibility to have a continuous flue gases treatment with an intermittent regeneration
- greener engine or greener exhaust gases

### Brief Description of the Invention

The invention relates to a process of combustion of a combustible material in a combustion chamber associated at least with admission means conducting and admitting an oxygen containing gas in the combustion chamber and exhaust means exhausting combustion flue gases out of the chamber and conducting flue gases towards an outlet system, in which :
the combustion chamber and/or the outlet system is provided with a catalyst and/or filtering and/or trapping support adapted to contact combustion flue gases, and
the catalyst and/or filtering and/or trapping support is regenerated or rejuvenated intermittently by contacting it intermittently with a composition containing at least one atom selected from the group consisting of cerium, europium, ytterbium, neodymium(Nd), praseodymium and mixtures thereof, in presence of at least a gaseous medium comprising at least a gas selected from the group consisting of combustion gases with a water vapor content of at least 15% at a temperature higher than 200°C.

The intermittent use of the regenerating composition, instead of a continuous use of the regenerating composition, enables to reduce the amount of composition used, and to regenerate or rejuvenate the catalyst and/or filtering and/or trapping support when absolutely required. Furthermore, such a controlled regeneration enables a correct use of the regenerating composition, for example an optimal use thereof. Assuming that the regenerating composition can be considered as a catalyst catalyzing the regeneration or rejuvenation, it is well known that the use of a catalyst outside specific working conditions (such as temperature or pressure, for example) or that the presence of a too large amount of catalyst could lead to a not correct catalysis, and/or to the production of more pollutants and/or to results which are unpredictable results. Furthermore, as the additive is used only as required, the risk of any possible health problem due to the exhaust of additive particles is reduced to substantially zero.

A further advantage of the intermittent regeneration with such a catalyst regenerating additive is that the NOₓ-Particules materials tradeoff of Diesel motor (a decrease of NOₓ often increase the emission of particulate material, and vice versa) can be better controlled.

Finally, when the combustion is considered as adequate with respect to the formation of NOₓ, there is no need to further add some further solid particles in the exhaust.

According to an embodiment, the catalyst and/or filtering and/or trapping support is at least present in the exhaust system. For example, the catalyst is a three way catalytic exhaust system.

Preferably, the intermittent regeneration or rejuvenation of the catalyst and/or filtering and/or trapping support is carried out
- when the exhaust system comprises a soot content greater than a predetermined value, and/or
- when the exhaust system has a gas flow resistance greater than a predetermined value, and/or
- when at least one parameter characterizing the exhaust combustion flue gases has an average value greater than a maximum admitted value or lower than a minimum requested value.

The intermittent regeneration is carried out in presence of combustion flue gases enriched in water vapor, with a water vapor volume content greater than 15%, for example comprised between 16% and 50%.

According to a possible embodiment, the intermittent regeneration is carried out in presence of combustion flue gases with addition of water vapor or steam into the flue gases, and/or with addition of water vapor or steam or water to the combustible material and/or to the oxygen containing gas to be introduced in the combustion chamber and/or by injecting water vapor or steam or water in the combustion chamber. The admission of water vapor or steam can also be carried out in presence of one or more other gaseous compounds, such as Nitrogen, oxygen, air, polluted air, sulfur containing gas, etc., mixtures thereof.

In the present specification, the wording "water vapor" means water vapor or steam, possibly in admixture with one or more other gases, such as nitrogen ,air, or oxygen, for example.

The catalytic and/or filtering and/or trapping support is advantageously a support or a filtering support for collecting soot particles from the combustion flue gases. According to a specific embodiment, the catalytic support is a NOₓ reducing catalytic surface of at least an element selected from the group consisting of the combustion chamber, admission means in contact with flue gases, exhaust means, outlet system, converter (oxidation converter, reduction converter, oxidation reduction converter, three way catalyst), filtering means, trapping means, exhaust gas recirculation (EGR) and combinations thereof.

Preferably, the catalytic support is at least partly provided with a primary NOₓ reducing catalyst, whereby said primary NOₓ reducing catalyst is present in an effective amount for ensuring a first average reduced NOₓ content in the flue gases, said average being measured for a combustion time of one hour.

Most preferably, the primary NOₓ reducing catalyst is treated with a composition containing at least one atom selected from the group consisting of cerium, europium, ytterbium, praseodymium, neodymium(Nd) and mixtures thereof, in presence of at least a gaseous medium comprising at least combustion gases with a water vapor content greater that 15% at a temperature higher than 200°C, whereby said primary NOₓ reducing catalyst is treated with an effective amount of said composition for maintaining an average reduced NOₓ content in a range lower than 5 times the first average reduced NOₓ content.

Further characteristics of the process of the invention are disclosed in the attached claims.

The regeneration treatment is advantageously operated at an average top combustion temperature lower than 900°C, preferably lower than 850°C, such as lower than 800°C, for example lower than 700°C. Said average temperature is for example determined on the combustion expansion cycle of the motor.

The treatment step is advantageously at least a partial regeneration step of the primary catalyst and/or a partial post coating of the primary catalyst.

Advantageously, said primary NOₓ reducing catalyst is treated ( preferably at least partly regenerated ) with an effective amount of cerium and/or europium and/or ytterbium and/or praseodymium composition or compound, said effective amount being selected so as to avoid substantially any cerium and/or europium and/or ytterbium and/or neodymium (Nd) and/or praseodymium nanoparticles emission at the outlet. For examples, the content of cerium and/or europium and/or ytterbium and/or praseodymium nano particles in the flue gases is lower than 50ppm, for example lower than 20ppm, advantageously lower than 10ppm, preferably lower than 5 ppm, such as comprised between 1 ppb and 2 ppm, for example 5ppb, 10 ppb, 50ppb, 100 ppb, 200 ppb, 500 ppb.

It has been observed that it was advantageous to add or admit water or water vapor or an aqueous medium (free or substantially free of cerium and/or europium and/or ytterbium and/or praseodymium and/or neodymium (Nd), but possibly mixed with one or more additives, such as glycols, alcohols, aldehyde, peroxide, plastifier, organic acid, salt of organic acid, phthalic acid and derivatives thereofetc., so as to form for example an alcohol containing medium or a glycol containing medium) in the combustion chamber (directly or indirectly for example via the inlet means or intake manifold) during a combustion period for which the primary coating is not treated with a cerium and/or europium and/or ytterbium and/or praseodymium and/or neodymium (Nd) containing composition or compound in presence of water vapor and/or exhaust combustion gases at a temperature higher than 200°C.

According to a specific embodiment of the method, water or water vapor or aqueous medium or an alcohol medium or a glycol medium free of cerium and/or europium and/or ytterbium and/or praseodymium and/or neodymium (Nd) is admitted in the combustion chamber or in the inlet means or intake manifold during a treatment step of the primary coating, such a water or water vapor or aqueous medium or alcohol medium or glycol medium admission enabling a better control of the water content present in the combustion chamber and/or enabling a supplemental control of the combustion in function of the amount of water added or present during the combustion.

The primary NOₓ reducing catalyst is advantageously a refractory catalyst, for example a refractory base material or support provided with one or more NOₓ reducing catalyst compounds or element.

According to a preferred embodiment, the primary NOₓ reducing catalyst forms a coating of at least a portion of inner wall(s) of the combustion chamber, preferably in the form of a series of adjacent spots, said spots being advantageously distributed quite uniformly on the inner wall(s) of the combustion chamber, said spots not covering completely the inner wall(s), but preferably a large number of spots contacting each other so that a series of spots connected the one to the other extend around one or more zone(s) not coated. According to an embodiment, the zones not provided with a cerium/europium/ytterbium and/or praseodymium and/or neodymium (Nd) coating are provided with carbon or are zone suitable for carbon deposit.

According to an embodiment, in which the combustion gases are filtered or washed or trapped or treated in a filter or washing means or a reactor or in an absorption means or absorber (for enabling for example a selective absorption) before being exhausted via the outlet, at least a part or a portion of the means conducting the flue gases from the combustion chamber to the filter and/or washing means and/or reactor and/or absorption means is provided with a primary NOₓ reducing catalyst coating. Said coating coats preferably the inner wall(s) of the conducting means in the form of a series of spots, whereby leaving zones of the wall(s) uncoated or free of coating.

According to another embodiment, in which a portion of combustion flue gases is recycled in the combustion chambre via a recycling conducting means, at least a part or a portion of the recycling means conducting flue gases towards the combustion chamber is provided with a primary NOₓ reducing catalyst coating. Said coating coats preferably substantially all the inner wall(s) of the conducting recycling means. The recycling means comprises for example the exhaust manifold, a control valve (advantageously cooled and/or intercooled) an exhaust pipe and a pipe linking the exhaust pipe with an inlet pipe or with the intake manifold. The recycling means can also be a simple pipe connecting the exhaust manifold with the inlet or with the intake manifold or with the combustion chamber. For example, for a combustion chamber comprising at least an inlet valve and an exhaust valve, the recycling means can be a pipe linking a zone outside the combustion chamber adjacent to the exhaust valve with a zone outside the combustion chamber adjacent the inlet valve.

Preferably, the combustion gases are filtered and/or washed and/or reacted and/or treated, whereby filtered and/or washed and/or reacted and/or treated combustion gases are recycled towards the combustion chamber.

According to a possible embodiment, the primary NOₓ reducing catalyst comprises at least one element selected from the group consisting of Ce, Pt, Pd, Cu, Sc, Y, Si, Eu, W, Va, Ga, Al, Ni, Ru, Mo, Al, La, Co, Nd, Rh, Ti, Ca, Yb, Pr, lanthanides and mixture thereof. Said primary reducing catalyst can comprises one or more of said elements as metal, oxide, dioxide, sulfide, sulfate, hydroxide, carbonate, phosphate, oxalate, chloride, fluoride, nitrate, carbide, iodide, ammonium, bromide, bromate, phthalate and mixtures thereof. The salts are in their anhydride form or in one or more of their hydrate forms. Said elements are advantageously in the form of one of their oxides, said oxide(s) being in a crystalline form, semi crystalline form, amorphous, semi-amorphous or combination thereof, but advantageously at least partly in their amorphous or semi amorphous state.

The primary NOx reducing catalyst comprises advantageously at least one plastizer or a complex plastizer, such as phthalate plastizer or plastizer having a high boiling point, such as a boiling point higher than 250°C, or prefereably even higher.

According to a detail of an advantageous embodiment, means determines or estimates at least roughly the NOₓ content of the combustion gases at different times and controls the treatment or regeneration of the primary NOₓ reducing catalyst when the determined or estimated NOₓ content is above a threshold or a predetermined value and/or controls the water and/or water vapor and/or aqueous medium admission in the combustion camber or the inlet thereof in function of the determined or estimated NOₓ content. For example, the control of the combustion is first operated by admitting water or water vapor or aqueous medium (free of cerium and/or europium) in the combustion chamber or the inlet thereof so as to maintain the NOₓ content in the flue gases to less than a maximum value, and when the NOₓ content cannot be maintained under said maximum value or an maximum admitted value, cerium and/or europium with water or water vapor or aqueous medium or an alcohol medium or a glycol medium is admitted in the combustion chamber or inlet thereof for regenerating the primary catalyst and controlling the combustion. As soon as the NO_{X} content is reduced to less than a minimum value, the regeneration of the catalyst is stopped and the combustion is further controlled by admitting water/water vapor/alcohol/glycol in the combustion chamber or inlet thereof.

Possibly the control of the regeneration step of the catalyst can be operated in function of a mobile average NOₓ content, for example a mobile average determined on a period of less than 30 minutes, such as on a period of 15 minutes or of less than 15 minutes, such as on 10 minutes, on 5 minutes or even on a period between 1 and 3 minutes.

Preferably, the primary NOₓ reducing catalyst coating has substantially uniform characteristics, for example forming a substantially uniform heterogenous dispersion on at least one surface selected from the group consisting of surface of the combustion chamber, valves, cylinders, cylinder heads, piston heads, spark plugs, manifolds (intake and/or exhaust, but preferably on at least substantially all the surfaces of the combustion chamber and/or at least portion of the piping, preferably substantially all the surface of the exhaust piping and/or of the exhaust gas recirculation.

Advantageously, the treatment or regeneration or rejuvenation of the primary catalyst coating is carried out by contacting said coating with combustion gases with a water vapor content greater than 15% end containing at least cerium and/or europium and/or ytterbium and/or praseodymium or a cerium and/or europium and/or ytterbium and/or praseodymium and/or neodymium (Nd) containing compounds or cerium and/or europium and/or ytterbium and/or praseodymium and/or neodymium (Nd) containing particles, said contact being carried out at a temperature higher than 200°C, advantageously higher than 300°C, preferably higher than 400°C.

Preferably, a cerium and/or europium and/or ytterbium and/or praseodymium and/or neodymium (Nd) containing compound is contacted with a gaseous medium containing water vapor so as to form a gaseous medium containing cerium and/or europium and/or ytterbium and/or praseodymium and/or neodymium (Nd) or cerium and/or europium and/or ytterbium and/or praseodymium and/or neodymium (Nd) containing compound or cerium and/or europium and/or ytterbium and/or praseodymium and/or neodymium (Nd) containing particles, said gaseous medium being then conducted in the combustion chamber.

For example, a cerium and/or europium and/or ytterbium and/or praseodymium and/or neodymium (Nd) containing compound is contacted with a gaseous medium containing water vapor having a temperature comprised between 20°C and 90°C, advantageously between 40°C and 75°C, preferably between 50°C and 65°C, so as to form a gaseous medium containing cerium and/or europium or cerium and/or europium containing compound or cerium and/or europium containing particles, said gaseous medium being then conducted in the combustion chamber.

According to another possible embodiment, cerium and/or europium and/or ytterbium and/or praseodymium and/or a cerium containing compound and/or an europium containing compound and/or ytterbium and/or praseodymium and/or neodymium (Nd) containing compound or a mixture thereof is contacted with a liquid or with an aqueous medium or with an alcohol medium or with a glycol medium, so as to form a alcohol/glycol/aqueous medium containing cerium and/or europium, such as an aqueous medium containing cerium and/or europium and/or ytterbium and/or praseodymium and/or neodymium (Nd). The alcohol/glycol/aqueous medium (advantageously injected in the combustion chamber) may contain one or more additives, such as peroxide, calcium hydroxide, magnesium hydroxide organic acid, salts thereof, phthalic acid, derivatives thereof or salts thereof, for example, as well as alcohol, glycols, aldehyde. The water or aqueous medium or alcohol medium or glycol medium contacting the cerium and/or europium and/or ytterbium and/or praseodymium containing compound has for example a controlled temperature comprised for example between 15°C and 75°C, such as 20°C, 25°C, 30°C, 35°C, etc. The medium, preferably aqueous medium, containing cerium and/or europium and/or ytterbium and/or praseodymium and/or neodymium (Nd) (which has a quite controlled and stable cerium/europium content) is then sucked, preferably injected, such as sprayed or nebulized or vaporized, in the combustion chamber or in the intake manifold (preferably after the throttle and/or the venturi; or in the venturi) or in the exhaust manifold (for example adjacent to the exhaust valve, whereby said medium is sucked during the inlet step before the closing of the exhaust valve) or in the piping used for the exhaust gas recirculation or recycling). When injecting water or hot water or alcohol or glycol in the combustion chamber, said hot water, alcohol, glycol is quickly vaporized in the combustion chamber due to the temperature of the wall of the combustion chamber and/or due to the presence of hot combustion gases or remaining combustion gases. The injection can be made under pressure, such as at a pressure higher than 2 10⁵ Pa, advantageously more than 5 10⁵ Pa, preferably more than 10 10⁵ Pa.

According to an embodiment, the treatment or regeneration is controlled in function of at least one of the parameters selected from the group consisting of charge or load of the combustion motor, combustible flow, air flow, speed of the combustion motor, air/combustible mixture, noxious gases, Oxygen content in the flue gases, CO₂ level in the flue gases, temperature of the motor (for example the admission of volumetric cerium/europium in the combustion chamber is always made during the starting of the motor, i.e. as long as the temperature of the motor has not reached a quite stable temperature, for example an average temperature comprised between 80 and 120°C or as long as the temperature of the refrigerant liquid is below at least 75°C, such as below about 85°C), in function of the variation of speed or acceleration (for example when the rate of acceleration is high), for example.

The process of the invention can be operated in a closed chamber (with intermittent opening of door(s) or valve(s)) or in an open chamber, such as boiler, reformer, fuel cells, kiln, incinerator, ovens, steel works, power station, explosion chamber, turbines, burner, central heating system, grass cutting machine, HCCI (heterogeneous charge compression ignition), CAI or homogeneous combustion engine, CCAI or Combustion charge auto ignition (spark plug engines), rocket, guns, flat engines, space shuttle, air planes, furnaces, propellant, pulsation combustion, auto inflammation engine, hybrid engines, 4 cycles steam engine, hydrogen engine or hybrid turbo fan pulsation detonation engine, for example.

Examples of motors or combustion chamber in which the process of the invention can be operated are :
linear motors, multistrokes motors (2,4,6,8,10,12, strokes), jet, turbine, turbojet, fan jet, statoreactor, rotative explosion motor (such as motors of the Wankel family), steam combustion motors, reciprocating motors, rocket type, motor with variable compression ratio, motor with variable lift and valve opening (in time and/or in position), turbocompressor, supercharger, multi injection, or controlled injections, for example with or without pre and/or post combustion. The combustion can be homogeneous, heterogeneous, stratified, and/or any combinations thereof. The motor can be cooled by air, water, oil, over fuel, refrigerant or synthetic refrigerant, for example.

Examples of possible fuels which can be used in the process of the invention are : Gas, methane, butane, propane, liquid, solid fuel, powder fuel, coke, biofuel, natural fuel, synthetic fuel, hydrazine, rocket fuels, hydrocarbons, petrochemical fuels, solid fuel, liquid fuel, gaseous fuel, rubber (synthetic / natural), dust fuel, sugar, alcohol, ethanol, crude oil, diesel, petrol alcohol waste, natural gas, hydrogen, algae, peat or coal (pulverized or not), for example and mixtures thereof, with or without water addition and with or without additives, such as scavengers (for example organometallic compound) or oxygenator or oxygenating compound. The fuel can possibly comprises a few amount of plastizer, such as phthalic plastizer, for example from 0.01 to 0.5% by weight.

The fuel can be admitted in the combustion chamber through injectors or nozzles for direct admission of the fuel into the combustion chamber or for indirect admission (for example for injecting the fuel in the combustion air before its introduction in the combustion chamber). The injection can be made intermittently and/or continuously, for example one injection for one combustion step or stroke, pilot injections, several intermittent injections for one combustion step or stroke, such as a pre injection, a principal injection and possibly a post injection, such as also a multiple injection (a series of 4, 5, 6 or more intermittent injections with variable amount of injected fuel). The injection can be operated with a dosage pump, with hydraulic means, with electromagnetic means, with piezoelectric means, with hydraulic-pneumatic means (such as the device disclosed in US 5,494,015) for example

The ignition of the combustion can be operated by one or more sparks, by compression, by light emission, by gas (flue gas) recirculation (HCCI, CAI, or CCAI, for example, by auto inflammation, or substantially by auto inflammation, said ignition being for example operated in a homogeneous and/or heterogeneous and/or stratified charge or premix charge. The ignition can be an ignition in volume and/or on surface, with or without pre combustion chamber. In such a case the precombustion is advantageously provided with a NOₓ reducing catalyst. According to an embodiment, the initial ignition is made on surface, whereby the condition are suitable thereafter for a volume ignition, such as a homogeneous volume ignition, and/or for ensuring a volume auto inflammation.

The combustion can be operated with atmospheric air, compressed air, oxygen enriched air, oxygen, mixtures of water vapor and oxygen and/or air, peroxides, etc. The comburant can enter the combustion chamber by natural aspiration, force draft (compressor, fan, turbine, supercharger such as a device disclosed in US 6,328,004) , for example.

The control of the combustion, especially of motor engine, can be operated by mechanical and/or electronic and/or pneumatic and/or magnetic means.

The combustion process can be provided with a gas recycling, such as an exhaust gas recycling starting from the exhaust valve and/or from the exhaust manifold and/or from the external outlet, and/or between the exhaust manifold and the external outlet, for example an internal exhaust gas recycling (external exhaust gases or exhaust gases escaping the chamber through an inlet valve and/or outlet valve are at least partly flowing back in the combustion chamber), an external exhaust gas recycling with or without intercooler and/or with or without a (multi) gases cleaning system (catalytic cleaning system, 3-way catalyst, De NOX system, trapping, absorbing system or particles filters, for example) and/or with or without water removal or water collecting system.

When the combustion chamber is provided with one or more valves, said valve(s) can be operated hydro pneumatically, electromagnetically, mechanically, or combinations thereof, for example with or without variable lift and/or time opening and/or duration.

The combustion can be a stoichiometric combustion or a lean burn combustion or a rich combustion or a mixture of lean burn and stoichiometric combustion or any combinations thereof. The air admission in the combustion chamber can be adapted for a stoechiometric environment , while when the combustion occurs, the combustion corresponds substantially to a lean burn combustion due to formation of oxygen or oxygen species. Preferably, when the air admission or intake is controlled for condition corresponding to a lean burn combustion, the combustion or at least the major part thereof (for example from about the begin up to about the end, such as combustion rate corresponding for example to more than 90%, such as more than 95%) occurs in leaner condition, most preferably as a extreme lean condition, such as the most extreme possible lean condition. In the present specification, a combustion is considered as a lean burn combustion when the combustion is a combustion of fuel in presence of an excess of oxygen or oxygen type or oxygen species. The most lean burn condition of the invention corresponds to the limit of flammability of the mixture fuel/comburant in presence of an excess of oxygen or oxygen type with respect to a stoichiometric. Said most lean burn limit depends from the motor configuration and its working. For example, the most lean burn limit (for example expressed as the lambda factor) for an engine of the invention is increased by at least 15%, advantageously at least 20%, preferably at least 25%, such as 30%, 40%, 50% or even more, with respect to the lean burn limit of the same engine but without catalyst coating and regeneration system. The exhaust gases of the combustion correspond however to conditions corresponding to exhaust gases for a stoechiometric post combustion. In case, the exhaust gases escaping from an engine of the invention are treated in a post combustion system, said post combustion system has a larger range of efficient working with respect to the true stoichiometry, for example with the range 0.5 x the stoichiometry up to 2 x the stoichiometry, for example between 0.7x the stoichiometry up to 1.5x the stoichiometry or between 0.8 x the stoichiometry and 1.2 x the stoichiometry. When a post combustion is carried out, said post combustion can be homogeneous, heterogeneous, stratified, combinations thereof, with or without continuous flow, such as with a surface reactor, such as a substantially cylinder or multi cylinder reactor with wall coated with one or more catalysts, such as catalyst comprising europium/cerium/praseodymium/ytterbium. The efficiency of the post combustion catalyst is even regenerated by the presence in the flue gases of traces of cerium/europium/ytterbium/praseodymium/neodymium (Nd).

The combustion chamber can comprise, when burning solid materials or solid powders, a fixed bed and/or a fluidized bed and/or a pulsed bed.

When the process is used for a car engine, the combustion chamber can be provided with means for controlling the compression ratio. The chamber can thus be a chamber with a variable volume.

When using a spark plug for the ignition, the spark plug can be a spark plug with one or more anodes (linear, circular, etc) and with one or more cathodes (linear, circular, etc.), but can also advantageously be a spark plug with only one or more electrodes of the same sign (positive or negative), the piston (such as piston head) and/or at least portion of walls of the combustion chamber forming then the counter electrode or the ground electrode. The electrode(s) can be coated with one or more coatings, such as coatings comprising one or more atoms selected from the group consisting of Ce, Eu, Yb, Pr, Pt, Pd, Co, Cu, Au, Ag, Nd or La, for example and mixtures thereof.

At least during the regeneration or rejuvenation step, the Oxygen sensor (oxygen content in the flue gases) has a good and correct working in the stoichiometric range, as well as in the lean range. The invention relates thus also tho a method in which the working of the Oxygen sensor is regenerated or rejuvenated, so as to be efficient at least in the stoichiometric range, as well as in the lean range. The regeneration or rejuvenation can be operated as for regenerating or rejuvenating the filtering and/or trapping and/or catalytic support as disclosed in the present specification.

According to a detail of an advantageous process of the invention, the combustion is operated in presence of water vapor and/or alcohol (ethanol, methanol, mixture thereof) and/or glycol (ethyleneglycol, propylene glycol)and/or an aldehyde. Said water vapor (for example with a temperature comprised between 40°C and 250°C, advantageously between 45°C and 75°C) possibly mixed with air is for example mixed with the intake air, injected in the intake manifold, but preferably injected directly in the combustion chamber. The alcohol and/or aldehyde and/or glycol when used are preferably injected directly in the combustion chamber, possibly mixed with the fuel to be injected. Possibly, said water, alcohol, glycol or aldehyde can be sprayed directly in the combustion chamber or in the intake (for example at the end of the intake, adjacent to the combustion chamber) as hot liquid, for example with a temperature greater than 35°C, such as temperature comprised between 40 and 95°C.

According to a specific process of the invention in which the combustion chamber is provided with a NOₓ reducing catalyst and in which the combustion flue gases are at least treated in a soot collector (i.e. a means for collecting soot particles, such as filter or a three way catalyst exhaust system, the three way catalyst can be used partly or completely as a soot collecting means), the regeneration or rejuvenation of the NOₓ reducing catalyst of the combustion chamber is carried out so as to not induce the regeneration or rejuvenation of the soot collector and whereby the regeneration or rejuvenation of the soot collector is carried out intermittently when required. The regeneration or rejuvenation of the NOₓ reducing catalyst and of the soot collector can be operated independently of each other, whether the regeneration thereof can be better controlled.

According to an advantageous detail of a process in which the combustion chamber is provided with a NOₓ reducing catalyst and in which the combustion flue gases are at least treated in a soot collector, the regeneration or rejuvenation of the NOₓ reducing catalyst of the combustion chamber is carried out so as to not induce the regeneration or rejuvenation of the soot collector, while the regeneration or rejuvenation of the soot collector is carried out when the NOₓ reducing catalyst of the combustion chamber has been regenerated or is regenerated or without inducing a regeneration or rejuvenation of the NOₓ reducing catalyst, preferably following substantially immediately a step of regeneration or rejuvenation of the NOₓ reducing catalyst. Advantageously the particles present due to the formation of the regeneration of the NOx reducing catalyst are collected on a soot collector which has not yet been regenerated, so as to ensure a better trapping of the said particles.

According to another detail of a process in which the combustion chamber is provided with a NOₓ reducing catalyst and in which the combustion flue gases are at least treated in a soot collector,
- the regeneration or rejuvenation of the NOₓ reducing catalyst of the combustion chamber is carried out so as to not lower the ignition temperature of soot in the soot collector to a temperature of at most 50°C, advantageously at most 30°C lower to the ignition temperature of the soot in the trap system when no or substantially no composition containing at least one atom selected from the group consisting of cerium, europium, ytterbium, praseodymium, neodymium (Nd) and mixtures thereof is admitted; and/or
- the regeneration or rejuvenation of the soot collector is carried out so as to lower the ignition temperature of soot in the soot collector to a temperature at least 50°C, advantageously at least 100°C, lower to the ignition temperature of the soot in the trap system when no or substantially no composition containing at least one atom selected from the group consisting of cerium, europium, ytterbium, praseodymium, neodymium (Nd) and mixtures thereof is admitted. For example the ignition temperature can be lowered to less than 300°C, such as less than 250°C.

According to specific embodiments of process in which the combustion chamber is provided with a NOₓ reducing catalyst and in which the combustion flue gases are at least treated in a soot collector,
- the regeneration or rejuvenation of the soot collector is carried out by contacting flue gases in the soot collector with a composition containing at least one atom selected from the group consisting of cerium, europium, ytterbium, praseodymium, neodymium (Nd) and mixtures thereof, during a period of time shorter than the period of time required for initializing the regeneration of the soot collector by contacting said soot collector with flue gases in presence of a composition containing at least one atom selected from the group consisting of cerium, europium, ytterbium, praseodymium, neodymium (Nd) and mixtures thereof, and/or
- the regeneration or rejuvenation of the soot collector is carried out by contacting said soot collector with flue gases in presence of an amount of a composition containing at least one atom selected from the group consisting of cerium, europium, ytterbium, praseodymium and mixtures thereof which is greater than the amount of composition containing at least one atom selected from the group consisting of cerium, europium, ytterbium, praseodymium, neodymium (Nd) and mixtures thereof required for regenerating or rejuvenating the NOₓ reducing catalyst of the combustion chamber, and/or
- the regeneration or rejuvenation of the soot collector is carried out by contacting the soot collector with flue gases with a concentration of at least one atom selected from the group consisting of cerium, europium, ytterbium, praseodymium, neodymium (Nd) and mixtures thereof which is greater than the concentration of at least one atom selected from the group consisting of cerium, europium, ytterbium, praseodymium and mixtures thereof in the flue gases required for regenerating or rejuvenating the NOₓ reducing catalyst of the combustion chamber.

According to a preferred embodiment of the process of the invention, the combustion is at least partly operated in presence of nano particles of hydrated aluminum silicate, such as clay, especially bentonite, preferably wolframite, cordierite, ..., such as colloidal suspension of these compounds.

Advantageously, at least the treatment or regeneration or rejuvenation step with cerium/europium or cerium and/or europium containing compound is operated in presence of nanoparticles of hydrated aluminum silicate compounds, such as clay, especially bentonite and wolframite. When operating the treatment or regeneration with cerium or cerium containing compound(s) and/or with europium or europium containing compound, the weight ratio hydrated aluminum silicate/ cerium or cerium content of the cerium containing compound and/or europium or europium content of the europium containing compound and/or ytterbium and/or praseodymium or ytterbium and/or praseodymium content of the ytterbium and/or praseodymium containing compound is comprised between 0.1 and 100, advantageously between 0.5 and 20, preferably between 0.7 and 10. The hydrated aluminum silicate is advantageously in the form of colloidal particles, such as colloidal bentonite or wolframite particles. Possibly, the bentonite clay can be replaced partly or totally with substance suitable to make refractory compounds, such as silica, magnesia, silica-magnesia, silica-alumina, montmorillonite clays. The size of the nano particles is preferably lower than 20 µm, most preferably lower than 15µm, especially lower than 10µm, or even lower such as 5µm, 3µm,2 µm, or even lesser.

The use of hydrated aluminum silicate compounds during the treatment or regeneration seems to be suitable for still improving the reduction of the amount of dioxin, PAN, PAH, Hg containing compounds, sulfur compounds, fluoride, borate, bromide, etc. in the flue gases, as well as precursors thereof. Dioxin if formed is then absorbed by the aluminum silicate, advantageously acidic activated. Furthermore, the presence of said aluminum silicate is suitable for forming refractory support or layer provided with atom(s) of the ceric and/or yttric family, such as Ce, Pr,Nd,Pm,Sm,Eu,Gd, La, Sc, Y, Yb (cerium and La being preferred), said support or layer having good heat resistance.

Possible refractory material which can be used with cerium and/or europium and/or ytterbium and/or praseodymium are compounds comprising one or more elements selected from the group consisting of Al, Si, Ca, Ti, Ni, Ga, Mo, W, Ru, Pd, La, Yt, Yb, Pr, Sc, Rh and other lanthanide, said compounds being a carbonate, nitrate, ammonium, sulfate, iodide, bromate, bromide chloride, carbide, fluoride, nitrate, oxide, sulfide, sulfate, oxalate, hydroxide, sulfate, phthalate and mixtures thereof, in their anhydride form or in one or more of their hydrate forms.

Specific examples of suitable refractory material are alumino silicates, hydrated alumino silicate, bentonite, wolframite, zeolithe, acid zeolithes, magnesite, bauxite, aluminium oxide, silica alumina, silica magnesia, kieselguhr, acid treated clays, montmorillonite clays, magnesium oxide, crushed firebricks, silica, glauconite, and mixtures thereof. Bentonite is preferred, while wolframite is most preferred. The refractory material can be in a hydrated form.

The cerium and/or europium and/or ytterbium and/or praseodymium used in the process of the invention can be metal cerium, metal europium, a cerium salt, possibly a hydrated form of such a salt, an europium salt, possibly a hydrated form of such a salt, an ytterbium and/or praseodymium and/or neodymium (Nd) salt, possibly a hydrated form of such a salt. As possible cerium salts, the following can be mentioned : carbonate, nitrate, ammonium, sulfate, iodide, bromate, phthalate, bromide chloride, carbide, fluoride, nitrate, oxide, sulfide, sulfate, hydroxide, sulfate and mixtures thereof, in their anhydride form or in one or more of their hydrate forms. The cerium and/or europium and/or ytterbium and/or praseodymium and/or neodymium (Nd) is preferably not in a form corresponding to an organometallic compound with at least a carbon chain or group of 3 or more than 3 carbon atoms not substituted by at least a hydroxyl group, most preferably not in a form corresponding to an organometallic compound with a hydrocarbon chain or group with two or more than two carbon atoms. More specifically, the cerium and/or europium and/or ytterbium and/or praseodymium compound is not in a form corresponding to an organometallic compound comprising a hydrocarbon group. The cerium and/or europium and/or ytterbium and/or neodymium (Nd) and/or praseodymium used in the process is preferably not mixed with liquid fuel comprising more than 90% by weight of hydrocarbon compounds with more than 4 carbon atoms, such as hexane or octane, for example.

The cerium compound can possibly be mixed with other rare earth compounds or lanthanides and/or can possibly contain one or more other rare earth compounds. Possible other rare earth compounds are Sc, Y, Yb, Pr, La, Nd, Pm, Sm Eu or Gd, for example and mixtures thereof. Said other rare earth metal can be as metal or in the form of a salt such as carbonate, nitrate, ammonium, sulfate, iodide, bromate, bromide chloride, carbide, fluoride, nitrate, oxide, sulfide, sulfate, hydroxide, sulfate, phthalate and mixtures thereof, in their anhydride form or in one or more of their hydrate forms. Most preferably the cerium compound contains at least trace of europium. For example, cerium is prepared from monazite. The cerium or rare earth compound can be a depleted mischmetal, such as a mischmetal depleted in Si, a mischmetal, depleted in yttrium, a mischmetal, depleted in europium,mischmetal depleted in thorium, a mischmetal depleted in lanthan, an enriched mischmetal, such as an mischmetal enriched with an alcaline and/or alcaline earth metal, such as calcium, magnesium, lithium or barium, for example

The cerium and other rare earth compounds can contain one or more elements selected from the group consisting ofNa, Mg, Ca, Zr, Hf, Nb,Y, Ni, Cu, Pt,Pd, Ga, Co, Rh, Mg,Ti, Ta, Th, Mn, Fe, Co, Al, Tl, Yb, Pr, Si and mixtures thereof, as metal and/or as a salt, such as carbonate, nitrate, ammonium, sulfate, iodide, bromate, bromide chloride, oxalate, carbide, fluoride, nitrate, oxide, sulfide, sulfate, hydroxide, sulfate and mixtures thereof, in their anhydride form or in one or more of their hydrate forms.

When introducing cerium and/or europium and/or ytterbium and/or praseodymium compound with one or more refractory compounds and/or precursors thereof into the combustion chamber, it has been observed that a protection effect was obtained for the primary reducing catalyst, whereby ensuring a better working thereof and a longer life time. Furthermore, it has also been observed that when introducing cerium and/or europium and/or ytterbium and/or praseodymium compound with one or more refractory compounds and/or precursors thereof into the combustion chamber, some catalytic NOₓ reduction was obtained in the volume of the combustion chamber, as well as in the outlet pipe and/or converter.

As it has been observed that the water content of the flue gases was quite high (such as more than 15% when burning liquid, for example from 20 to 40%) , in an embodiment it is proposed to remove some water from the exhaust gases, before and/or after (preferably at least partly before) said gases are treated in the cleaning system. Said water removal is made by condensation, such a condensation being advantageous for recovering or trapping solid particles or for forming larger particles, which are easy to trap. The so condensed water can then be reused for being injected in the combustion chamber or in the intake.

The condensed water can be reheated in a specific device (indirect contact) using the heat of flue gases, heat of the cooling fluid of the motor, heat of the oil or lubricating agent of the motor, for example.

Such a condensation reduces the volume of exhaust gases, such a reduction of volume creating a suction or depression in the combustion chamber. By selecting the place where the condensation occurs, it is possible to control the moment of the depression created in the combustion chamber.

However, when using specific catalyst for the treatment of flue gases before their external exhaust, said catalyst having a better efficiency in presence of water or water vapor, it can be of interest to limit or avoid any water condensation before said catalytic treatment.

According to another embodiment, the excess of water is removed before the catalytic treatment.

For admitting the effective amount of cerium and/or europium and/or ytterbium and/or praseodymium containing compound and the effective amount of refractory material or precursor thereof, it is possible to use various systems such as the systems disclosed in FR 2,731,009; US 4,991,395; US 4,844,028 and Celcat ® system, but preferably adapted for admission of compound(s) after the throttle, if any, (the invention relates thus also the use of one system disclosed in FR2,731,009 and/or in US 4,991,395 and/or US 4,844,028 and/or Celcat ® system for the admission of compounds in the inlet system after the throttle), with use of a composition containing cerium and/or europium and/or ytterbium and/or praseodymium and/or neodymium (Nd) containing compound and refractory material or precursor thereof, for example a mixture of microparticles and/or nano particles. The admission can also be operated separately, so as to be able to control the ratio amount of cerium and/or europium admitted in the combustion chamber/amount of refractory material or precursor thereof admitted in the combustion chamber. However, preferably the cerium and/or europium and/or ytterbium and/or praseodymium and/or neodymium (Nd) containing compound and the refractory material and/or precursor thereof are admitted in the combustion chamber as a mixture, preferably as a substantially homogeneous mixture, most preferably as a hydrated and/or wetted mixture, especially as an oxygen containing gas flow (such as an airflow) containing hydrated and/or wetted cerium and/or europium and/or ytterbium and/or praseodymium and/or neodymium (Nd) containing compound and hydrated and/or wetted refractory material and/or precursor thereof.

The cerium and/or europium and/or ytterbium and/or praseodymium used in the process of the invention can be metal cerium, metal europium, a cerium salt, possibly a hydrated form of such a salt, an europium salt, possibly a hydrated form of such a salt, an ytterbium and/or praseodymium and/or neodymium (Nd) salt, possibly a hydrated form of such a salt. As possible cerium and/or europium and/or ytterbium and/or neodymium (Nd) and/or praseodymium salts, the following can be mentioned : carbonate, oxalate, nitrate, ammonium, sulfate, iodide, bromate, bromide, chloride, carbide, fluoride, nitrate, oxide, sulfide, sulfate, hydroxide, sulfate, phthalate and mixtures thereof, in their anhydride form or in one or more of their hydrate forms.

The cerium and/or europium and/or ytterbium and/or praseodymium and/or neodymium (Nd) compound can possibly be mixed with other rare earth compounds and/or can possibly contain one or more other rare earth compounds. Possible other rare earth compounds are Sc, Y, La, Pr, Nd, Pm, Sm Eu, Gd, etc. and mixtures thereof. Said other rare earth metal can be as metal or in the form of a salt such as oxalate, carbonate, nitrate, ammonium, sulfate, iodide, bromate, bromide, chloride, carbide, fluoride, nitrate, oxide, sulfide, sulfate, hydroxide, sulfate, phthalate and mixtures thereof, in their anhydride form or in one or more of their hydrate forms. Most preferably the cerium compound contains at least trace of europium and/or ytterbium and/or praseodymium and/or neodymium (Nd). For example, cerium is prepared from monazite and/or a mixture of monazite with yttric based ores, such as bastnasite, etc.

The cerium and other rare earth compounds can contain one or more elements selected from the group consisting of Na, Mg, Ca, Zr, Hf, Nb, Ta, Mn, Fe, Co, Rh, Al, Tl, Si, La, Pt, Pd, Ni, Ru, Sc or Ga, for example and mixtures thereof, as metal and/or as a salt, such as carbonate, nitrate, ammonium, sulfate, iodide, oxalate, bromate, bromide chloride, carbide, fluoride, nitrate, oxide, sulfide, sulfate, hydroxide, sulfate, salt of organic acid, phthalate, and mixtures thereof, in their anhydride form or in one or more of their hydrate forms.

### Brief description of the drawings

Fig 1 is a schematic view of an internal combustion motor (one piston being drawn) with a catalyst regeneration system
Fig 2 is an enlarged view of a detail of the motor of Fig 1,
Fig 3 is a schematic view showing variation of NOₓ content in the flue gases,
Fig 4 is a view of an embodiment similar to that of figure 1, but with an exhaust gas recycling,
Fig 5 is a view similar to that shown in figure 1, with further precoating,
Fig 6 is a schematic view of still a further embodiment,
Fig 7 is a schematic view of a possible control unit,
Fig. 8 is an enlarged schematic view of a primary coating,
Fig 9 to 13 re schematic view of processes of the invention.

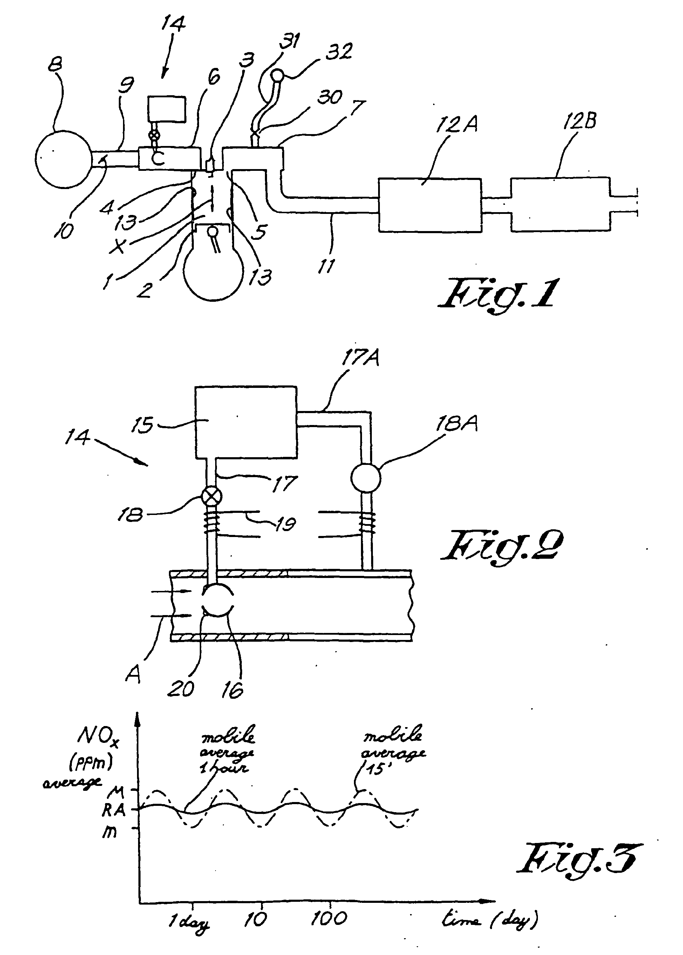

The motor of Fig 1 comprises several combustion chambers 1 in each of which a piston 2 is moved (arrow X). A spark 3 is used for the ignition of the mixture air-fuel present in the chamber 1. Valves 4,5 are actuated so as to allow the inlet of air and combustible in the chamber 2 and the outlet of flue gases out of the chamber 2. The motor comprises also : an intake manifold 6, an outlet manifold 7, an air filter 8, a pipe 9 with possibly a valve 10 for controlling the fuel consumption, an outlet pipe 11, a filtering system 12A for the flue gases (for example for further oxidizing thereof, for trapping particles or 3-ways catalyst system, for example and a soot trap system 12B. The engine of Fig 1 is a four stroke engine using for example diesel as fuel.

The lateral cylindrical wall of each combustion chamber 2 is provided with a thin catalyst coating 13, said coating 13 being homogeneous or homogeneously dispersed on said wall, in the form of adjacent spots (see figure 14). For example, said catalyst coating comprises one or more elements selected among the group consisting of Pt, Pd, Ce, Eu, Nd, Yb, Pr, La, Rh, etc. The coating is such that an average reduction of the NOₓ formation can be achieved. Such a coating is for example applied by plasma spray, spray, dipping or curing, for example with or without precleaning step, for removing partly or completely the remaining carbon particles. Said catalyst coating comprises a series of catalyst spots CS adjacent the one to the other, some of which contacting each other. Zones Z remain however free of catalyst deposit or poor in catalyst deposit. For example, the spot CS are rich in lathanides, for example with a content of 20 to 50% La and/or Ce (content by weight determined as atom). The spots have an average size of less than 100 µm, advantageously of less than 25 µm, preferably of less than 10µm, The surface is advantageously provided with a quite homogeneously distributed particles with a size of less than 1 µm, i.e. nanoparticles such as particles with a size of less than 500nm, and even less than 250nm, such as less than 100nm, less than 50nm. Said nanoparticles comprises nanoparticles NM1 with a high lanthanide and/or cerium and/or europium content (such as a total (lanthanide + cerium + europium) content of more than 10% by weight, advantageously of more than 20%, for example comprised between 25 and 40%, said weight content being measured as atoms), and nanoparticles NM2 with a low lanthanide and/or cerium and/or europium content (such as a total (lanthanide + cerium + europium) content of less than 10% by weight, advantageously of less than 5%, for example comprised between 0.5 and 3%, said weight content being measured as atoms). Said nanoparticles NM2 are located essentially in spots CS present on the surface.

The nanoparticles NM1 and NM2 have advantageously a metal content (such as Cu, Zn, Pt, Au, Ag, Cr, Al, Pd, Ni and mixtures thereof) of more than 5% by weight, preferably of more than 10% by weight, such as between 15 and 50% by weight (said metal content being measured as atomic metal content).

Such a catalytic coating has for example a BET surface of 2 to 10m²/g, said surface being measured three heat treatment steps, a first at 250°C for 8 hours, the second at 300°C for 8 hours and the third at 210°C for 8 hours, so as to remove gaseous product or product suitable to be converted into gas at said temperature. Such a coating, advantageously in the form of spots, such as adjacent spots distant from each other, ensures a contact surface between flue gases and the surface of the wall of the chamber which is at least 10 times (advantageously at least 25 times, preferably from 30 to 300 times, such as 50, 100, 150, 200 times) the wall surface calculated without the coating layer.

The catalytic coating comprises during its working some carbon containing product. The volume of carbon containing products which are volatile at a temperature of 300°C at atmospheric pressure is comprised between 0.05 cm³ and 0.3 cm³ (advantageously from 0.1 and 0.15 cm³) per cm³ of catalytic coating. According to a possible working assumption of the catalyst, the catalyst is able to absorb and to release some volatile compounds present in the combustion chamber, whereby taking out from the flue gases some still combustible gaseous products, while liberating absorbed combustible gaseous products (products absorbed during a preceding combustion phase or at the end of a preceding combustion phase) during the combustion phase. The catalyst has to be regenerated so as to ensure a correct absorption/release mechanism. By using a coating catalyst, the previously absorbed combustible material will be released in the combustion and will participate to the combustion chamber. As the release of volatile hydrocarbons from the coating is function of the temperature and pressure, the combustion time will be prolonged, especially due to the absorbed hydrocarbons present on the cylindrical portion of the cylinders. It seems also that a better controlled combustion can be reached due to the combustion of released hydrocarbons from the coating.

For a combustion chamber, it seems that the volume of catalyst coating is advantageously from 0.1 to 5 g per volume of 100 cc of combustion chamber, for example from 0.2 to 3 g, such as 0.4, 0.5, 0.7, 1g and 2g per 100 cc. Said weight is measured without carbon absorbed products.

The catalyst coating comprises advantageously from 5 to 50% by weight of a plastizer, such as a phthalate plastizer, with a boiling point higher than 200°C.

The motor is associated with a system 14 for treating, when required, the primary catalyst coating 13.

The treatment is controlled so that the average NOₓ content of the flue gases (average measured on combustion period of 1 hour) remains substantially constant. (see figure 3)

The treatment is advantageously intermittent, i.e. during some period water vapor and cerium is admitted in the intake manifold, while during some other period, water vapor and cerium is not admitted in the intake manifold.

Said system 14 comprises : a water tank 15, an ovoid water vapor distributor 16, a pipe 17 connecting the water tank 15 with the vapor distributor, a valve 18 mounted on the pipe for controlling the water flow out of the water tank, and a heating system 19 (associated to the pipe 17) for converting the liquid water into vapor. The vapor distributor is placed in the intake manifold 6. The distributor 16 has an ovoid inner chamber 16A provided with an air inlet opening 16B and with an air/vapor outlet opening 16C. Air flows in the inner chamber 16A (from the inlet 16B towards the outlet 16C) according to a turbulent pattern so as to ensure a good mixing of the air with the water vapor. The wall of the vapor distributor are coated with a cerium containing coating. The coating comprises from 10 to 25% by weight of wolframite clay, and 90 to 75% weight of a rare earth containing composition containing about 50% Ce, 20-26% La, 15-19% Nd, 5-6% Pr, trace of Europium and trace of ytterbium. The weight ratio rare earth composition/wolframite clay was comprised between 3 and 9. When the air/water vapor mixture contacts the Ce containing catalyst, said air/water vapor is charged with nano particles of wolframite clays and/or rare earth. Due to the turbulence of the air in the ovoid chamber, a good contact can be provided between the air/water vapor flow and the Ce containing coating. The turbulence is also advantageous for ensuring the formation of a substantially homogeneous air/water vapor flow with Ce particles (preferably nanoparticles) and with refractory particles. When the water vapor formed in the pipe 17 flows into the ovoid chamber 16, said water vapor is mixed with air, said mixture having then a temperature comprised between 60 and 70°C.

The air/water vapor flowing out of the ovoid chamber flows in the intake air manifold 6 before flowing in one combustion chamber. The outer wall of the ovoid shaped distributor is provided with fins 20 so as to induce a rotational inwards movement to the principal air flow A.

It is advantageous to use systems, such as an ovoid chamber, provided with cerium/europium/ytterbium and/or praseodymium containing element(s) having a face in contact with water vapor, said element(s) being such that the surface in contact with water vapor remains substantially constant during the use of the system, for example for more than 75,000 Km, such as more than 80,000km, more than 100,000 km or even more than 150,000km, or even more than 200,000 km.

In said combustion chamber, fuel is for example injected by means of controlled nozzles 20.

At least the air/water flow with nano particles of cerium and possibly refractory material is submitted to a compression (pressure of 5 to 20 bars), before being used for the combustion. Advantageously at the end of the compression step of the air/water vapor flow, fuel is injected.

Thereafter, the flame ignition is started by the spark. Due to the explosion, the temperature and the pressure in the combustion chamber raise sharply up to a pressure of 60-100 bars (or even more) and up to a temperature (average) of about 700-1000 °C (or even more). Due to the explosion, some cerium particles and refractory materials impacts the primary coating, whereby ensuring a treatment of said primary coating (at least partial regeneration of the primary coating) and a partial post coating of the wall of the combustion chamber. Furthermore, it has been observed that the presence of cerium nano particles and refractory nano particles in the volume of the combustion chamber had also a catalytic effect on the combustion reaction (better control of reaction or NOₓ reducing effect, for example.

The rate of addition of cerium containing catalyst was adjusted so as to be about 0.5 to 50 ppm per liter of fuel, preferably between 0.5 and 20ppm per liter, such as 0.5 ppm, 1 ppm, 3 ppm and 5 ppm. The rate of water vapor addition was adjusted so as to be about 0.0051 to 0.11 water per liter of fuel, advantageously between 0.01 and 0.075 1 water per liter of fuel, preferably 0.051 and 0.071 water per liter of fuel. The fuel has for example a density comprised between 0.7 and 1.5. The fuel is advantageously liquid or can be rendered liquid by heating.

The intermittent treatment can also be carried out for regenerating or rejuvenating the filtering system 12A, as well as the soot trap system 12B. When the filtering system 12A or the trap system is clogged, for example due to soot particles, water vapor and cerium is admitted in the intake manifold, whereby a mixture comprising fuel combustion gases, water vapor and cerium is exhausted via the exhaust pipe 11 in the filtering system 12A and the trap system 12B. Said gaseous mixture has a cleaning/washing effect, as well as reduce the initial burning temperature of soot particles.

The intermittent regeneration of the NOₓ primary catalyst present in the combustion chamber can be operated together with the regeneration or rejuvenation of the filter 12A and/or the trap 12B, but can be operated at different moment. The intermittent regeneration of the NOₓ primary catalyst present in the combustion chamber requires for example an amount of cerium and water vapor which is lesser than the amount of cerium and water vapor required for the regeneration or rejuvenation of the filter 12A and/or trap 12B. According to a preferred embodiment, the regeneration of the NOₓ primary catalyst of the combustion chamber is carried out when the filtering and/or trapping system (12A,12B) has to be regenerated.

The amount of cerium admitted in the intake manifold for the regeneration or rejuvenation of the primary NOₓ reducing catalyst of the combustion chamber is advantageously lower than the amount of cerium admitted for the regeneration of the soot trap system. It means also that when only the primary NOₓ reducing catalyst has to be regenerated, the duration of treatment with cerium and water vapor is for example very short, while the duration of treatment with cerium and water vapor is much longer for the regeneration of the soot trap or the three way catalyst.

When only the primary NOₓ reducing catalyst of the combustion chamber has to be regenerated, the amount of cerium and water vapor or the duration of treatment will advantageously be sufficiently low for not enabling the regeneration of the soot trap.

The regeneration of the soot trap system requires often a higher amount of cerium. Therefore, when having to regenerate the soot trap system, it is advantageous to increase progressively (in steps or continuously) the cerium concentration in the flue gases. For example, in a first step, the cerium added in the intake manifold will be sufficient for regenerating the primary NOₓ reducing catalyst of the combustion chamber (but not for regenerating the soot trap), while in a second step, the cerium concentration in the flue gases is increased so as to be sufficient for regenerating the soot trap or for initializing the soot trap regeneration. Advantageously an intermediate step without adding cerium is carried out between the first and the second step. Such a working is advantageous as the soot present in the flue gases due to the regeneration of the catalyst of the combustion chamber will then be better trapped in the trap system.

According to still a further possible embodiment, a very low amount of cerium is admitted continuously in the inlet manifold, said amount being sufficient for regenerating the primary NOx reducing catalyst of the combustion chamber, but being not sufficient for reducing of at most 50°C, advantageously at most 30°C, the ignition temperature of the soot in the trap system with respect to the ignition temperature when no or substantially no cerium is admitted. When the soot trap system has to be regenerated, the amount of cerium added in the inlet manifold is increased, so as to reduce the ignition temperature of the soot in the soot trap of at least 50°C, advantageously of at least 100°C, with respect to the soot ignition temperature without cerium.

Figure 3 is a schematic diagram of the average NOₓ content in the flue gases (mobile average measured on a period of 1 hour working) in function of the time. As it can be seen from the starting of the engine, a substantially constant reduced NOₓ content could be achieved in the flue gases. For example, the average reduced NOₓ content in the flue gases was lower than about 30 ppm (such as lower than 20ppm), meaning a reduction of more than 50%, advantageously of more than 75%, preferably of more than 80% of the NOₓ content when no primary coating and no cerium/europium treatment are operated. In dashed line, the NOₓ mobile average content on a period of 15 minutes is represented. The regeneration of the system is operated as follow : As long as the NOₓ mobile average content on a period of 15 minutes is lower than a predetermined threshold value (M, for example corresponding to 1.3 x the requested average RA), no regeneration of the catalyst coating is operated by admission of cerium and/or europium and/or neodymium (Nd) compound in the combustion chamber. When the NOₓ mobile average content on a period of 15 minutes is higher than the predetermined threshold value (M, for example corresponding to 1.3 x the requested average RA), regeneration of the catalyst coating is operated by admission of cerium and/or europium and/or ytterbium and/or praseodymium compound in the combustion chamber. Said regeneration is for example carried out up to reaching a minimum threshold value (m, for example a value corresponding to about 0.7 x the requested average RA). The regeneration or not of the primary catalyst can be controlled for example by controlling the valve 18, i.e. water vapor is admitted in the ovoid chamber 16 when regeneration of the coating catalyst is required. This enables a better use of the cerium/europium/ytterbium and/or praseodymium and/or neodymium (Nd) particles used for regeneration and a better efficiency of the catalyst, as it is well-known that an excess of catalyst will catalyze also secondary reaction, such as undesirable secondary reaction.

According to a preferred embodiment, during a non regeneration step, some water vapor was admitted in the intake air, via the pipe 17A provided with a valve 18A and a heating means 19. The admission occurs then advantageously between the ovoid chamber 16 and the combustion chamber. Such an admission is for example operated when no water vapor is admitted in the ovoid chamber 16 by the pipe 17. This enable to have the benefit of water vapor in the combustion chamber during the non regeneration step, i.e. when the primary coating is sufficiently efficient.

In case the ovoid chamber 16 is located between the admission via pipe 17A and the combustion chamber, a minimum amount of water vapor can entered in the ovoid chamber 16, whereby enabling to have a minimal cerium and/or europium and/or ytterbium and/or praseodymium and/or neodymium (Nd) content in the intake air, such as a minimal amount comprised between 1 and 100ppb, such as 20 ppb, 50 ppb, 75 ppb. When the catalyst coating has to be regenerated, water vapor is then admitted in the ovoid chamber 16, while the water vapor admission via pipe 17A is reduced or stopped, preferably reduced.

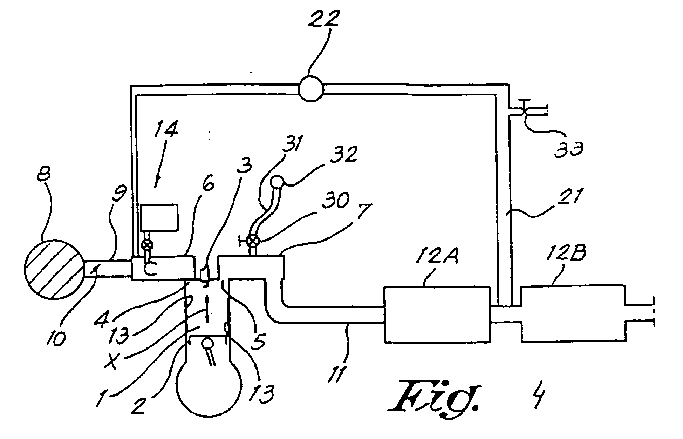

Figure 4 is a schematic view of an internal engine similar to that of figure 1, except that the engine is associated with a exhaust gas recycling system (EGR).

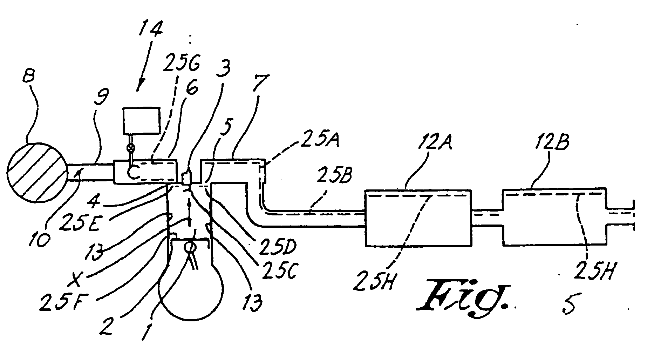

In the internal engine of figure 5, a pipe 21 connects the outlet pipe 11 after the 3 ways catalyst or trap system 12A with the intake manifold 6. A fan or turbine or turbo fan 22 is mounted on said pipe 21 so as to ensure the suction of part of exhaust gases for recycling said sucked exhaust gases in the intake manifold 6.

By controlling the speed of rotation of the fan, turbine or turbo fan, it is possible to control the volume of exhaust gases recycled.

The regeneration of the primary NOₓ reducing catalyst of the combustion chamber and/or of the soot trap system (12B) can be operated as disclosed in the description of figure 1.

However, advantageously the amount of recycled exhaust gas will be adapted for the regeneration to be operated. For example, when the primary NOₓ reducing catalyst has to be regenerated, the amount of recycled flue gases will be reduced with respect to the amount of recycled flue gases when no regeneration has to be carried out. When the soot trap has to be regenerated, the amount of recycled flue gases will be reduced with respect to the amount of recycled flue gases when no regeneration has to be carried out, but will advantageously be greater than the amount of recycled flue gases; if any, used during the regeneration of the primary NOₓ reducing catalyst.

Figure 5 is a further schematic view of an internal engine of the invention, similar to the engine of figure 1, except that one or more of the following elements are provided with a primary NOₓ reducing catalyst coating 25 (shown in dashed lines). Said elements are :
- the exhaust manifold 7 with a catalyst coating 25A, and/or
- the exhaust pipe 11 with a catalyst coating 25B, and/or
- the spark 3 with a catalyst coating 25 C, and/or
- the outlet valve with a catalyst coating 25D, and/or
- the inlet valve with a catalyst coating 25 E, and/or
- the piston 2 with a catalyst coating 25F, and/or
- the intake air manifold with a catalyst coating 25G and/or
- the trap or oxidizing system 12A,12B with a catalyst coating 25H a.

Said catalyst coating is for example a coating comprising cerium and/or europium and/or ytterbium and/or praseodymium and/or neodymium (Nd) and at least a refractory compound.

The interest to have coating on elements in contact with hot flue gases is to enable even after the combustion step a NOₓ reduction, an anti soot deposit and an anti carbon deposit.

In the devices of figures 1, 4 and 5, the cerium containing compound was used for keeping substantially steady the NOₓ reduction. This stable NOₓ reduction seems to be the consequence of a regeneration or rejuvenation of the primary coating, said regeneration/rejuvenation being for example made by a partial post coating.

In the devices of Figures 1, 4 and 5, cerium and refractory materials were deposited on surfaces in contact with flue gases, especially the inner wall of the combustion chamber. Such a deposit is substantially homogeneous, i.e. a homogeneous dispersion of particles, said deposit being preferably only partial.

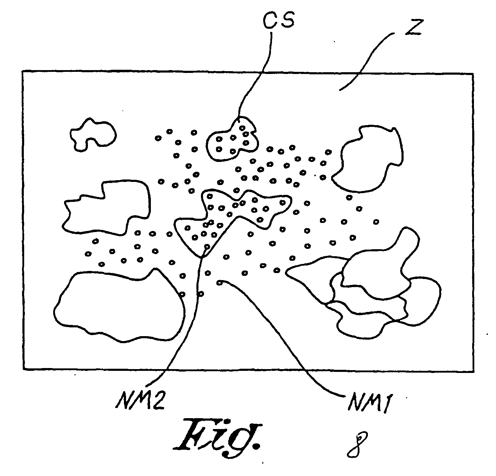

When making tests with the internal engine of anyone of the figures 1, 5 to 8, it has been observed that the regeneration or rejuvenation of the primary coating was better when using simultaneously cerium and/or europium and/or ytterbium and/or praseodymium (possibly mixed with other rare earth), together with a refractory material or a precursor thereof.

While in said figures, the invention is disclosed for an internal combustion engine, the process of the invention can also be carried out for other type of combustion engines or processes using a primary NOₓ reducing catalyst. For example, the process of the invention can be carried out in a gas turbine, a jet, turbo jet, an incinerator, a fixed bed, a fluidized bed, HCCI, CAI, or pulse combustion, the combustion chamber and/or the outlet pipe of which being provided with a primary NOₓ reducing catalyst coating. However, preferably the combustion is made in a combustion chamber provided with a primary NOₓ reducing catalyst coating, in presence of cerium/europium and water vapor at least partly at a pressure higher than 2 10⁵ Pa, advantageously at a pressure higher than 5 10⁵ Pa, preferably higher than 10 10⁵ Pa.

Further tests have then been carried out in order to see whether the simultaneous use of rare earth metal and refractory material or precursor thereof, in presence of water vapor could improve combustion characteristics as such, for example reduces the formation of NOₓ, the formation of soot and carbon particles or the formation of SO₂.

It was observed that when adding to the rare earth catalytic system of the system disclosed in US 4,844,028 or in US 4,991,395 with a minimum amount of refractory nano particles, such as aluminosilicate particles, preferably wolframite particles, a better NOₓ reduction could be achieved than with the system disclosed in US 4,844,028 or in US 4,941,395.

Furthermore, the presence of said nano particles of refractory material was also reducing possible corrosion problems or risks.

Tests have been made with the devices as shown in figures 1, 5 to 8, except that no primary NOₓ reducing catalytic coating was provided in the different parts of the engine. Said test have shown that a NOₓ reduction could be achieved, after a few hours of working. The number of hours for obtaining a reasonable NOₓ reducing effect was less than the number of hours required for obtaining a NOₓ reduction effect when using substantially only a rare earth compound or mixture.

In the devices of Figures 1, 4 and 5, the rate of cerium admission is function of the amount of fuel introduced in the combustion chamber.

According to a possible embodiment of said devices, said devices are connected to a control means adapted for example to introduce in the combustion chamber cerium and/or europium when the NOₓ average content (for example average calculated on a combustion period of 1 hour) and to stop the introduction of cerium and/or europium in the combustion chamber when the NO_{X} average content is below or about a minimum value.

In the devices of figures 1, 4 and 5, it can be of interest to have an air admission, especially a controlled fresh air admission in flue gases. Such a controlled air admission is for example in the device of figure 1 an air admission valve 30 connected to a pipe 31 on which a fan 32 is mounted. Said fresh air is admitted in the exhaust gases manifold 7. The admission of fresh air can be controlled for example in function of the richness of the flue gases, and/or so as to have always a substantially stoechiometric flue gases and/or so as to reduce the temperature of the exhaust gases.

In the device of figure 4, two air admissions are provided, a first similar to that of the device of figure 1, the second adapted for admitting fresh air in the exhaust recycling pipe 21. As a fan 22 is already mounted on said pipe 21, it is possible to use a valve 33 or a controlled valve for the admission or sucking of fresh air in the pipe 21.

In the device of figures 1, 4 and 5, the admission of cerium particles is made in the intake manifold. In possible embodiments, it is possible to make such an admission in the exhaust manifold, in the exhaust recycling pipe, in the exhaust pipe or in the intake pipe 9. However, in the preferred embodiment, the cerium admission is made in the intake manifold and/or in the exhaust recycling pipe, most preferably in the intake manifold.

While in the devices of the invention shown in the attached drawings, cerium is admitted with refractory material (clays), it is possible to make separate admission, a first admission means for admitting cerium particles in the intake air and a second admission for admitting refractory material (such colloidal clay) in the intake air.

According to further possible embodiment, walls in contact with hot flue gases, such as walls of the combustion chamber, wall of the outlet manifold, wall of the exhaust pipe, wall of the exhaust recycling means are provided with a refractory coating or layer.

In the example, the catalyst used for regeneration or for the rejuvenation or for the treatment of the primary catalyst coating comprises cerium. In other possible examples, the catalyst comprises europium and refractory material, such clay, hydrated clay particles. In still another example, the catalyst comprises a refractory material and ytterbium and/or praseodymium and/or neodymium (Nd).

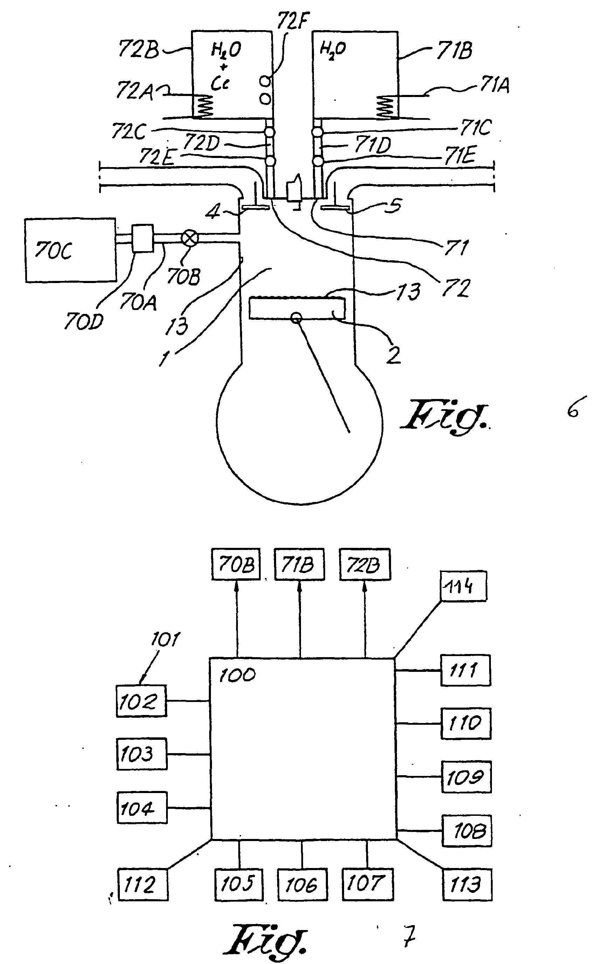

In the embodiment of figure 6, the combustion chamber 1 is provided as in the embodiment of figure 1 with a coating 13 comprising lanthanides and/or cerium and/or europium and/or ytterbium and/or praseodymium and/or neodymium (Nd). Such a coating was also present on the surface of the piston 2.

The combustion chamber 1 is provided with injection means 70, 71,72 for injecting in the combustion chamber fuel or petrol, water and water containing cerium and/or europium and/or ytterbium and/or praseodymium and/or neodymium (Nd).

The combustion chamber is provided with an inlet opening with a controlled valve 4 and an exhaust opening with a controlled valve 5.

The injection means 70 for injecting (for example by spraying or pulverizing) fuel or petrol in the chamber 1 or for introducing a gaseous fuel in the chamber 1 is connected via a pipe 70A with a controlled valve 70B to a tank or reservoir 70C. A means 70D such as a pump enables to give sufficient pressure to the fuel for its injection in the chamber. The injection of fuel is advantageously controlled, so that some fresh fuel is injected during the combustion at different moments or combustion stages.

The injection means 71 is intended for injecting water or water vapor (preferably hot water, such water with a temperature of 30 - 90°C, especially water with a temperature of about 40 to 75°C) in the combustion chamber during an air intake. The water is heated by a heating means 71A (electrical heating means, heater using the heat of the motor cooling agent, heater using the heat of the flue gases, etc) in a tank or reservoir 71B. The hot water is pumped by the controlled pump 71C for flowing in the pipe 71D provided with a controlled valve 71E.

The injection means 72 is intended for injecting water or water vapor containing cerium and/or europium and/or ytterbium and/or praseodymium (preferably hot water, such water with a temperature of 30°C to 90°C, especially water with a temperature of about 40 to 75°C) in the combustion chamber during an air intake. The water is heated by a heating means 72A (electrical heating means, heater using the heat of the motor cooling agent, heater using the heat of the flue gases, etc) in a tank or reservoir 72B containing particles, beads, pieces, comprising cerium and/or europium 72F. The hot water is pumped by the controlled pump 72C for flowing in the pipe 72D provided with a controlled valve 72E.

The injection of water vapor or hot water (free of cerium/europium/ytterbium / praseodymium and/or neodymium (Nd)) via the pipe 71, as well as the injection of water vapor or hot water containing cerium/europium ytterbium / praseodymium can be controlled, so that the requested amount of cerium/europium ytterbium / praseodymium and/or neodymium (Nd), as well the necessary water amount is present in the combustion chamber for enabling a correct NOₓ reduction. For example, when the catalyst coating has not to be regenerated, only water or water vapor and fuel are injected in the combustion chamber.

For avoiding possible freezing problems of the water, various additive can be added in the reservoir 72B and 71B, such as alcohol (alcohol means in the present specification compounds with a monoalcohol function, with two or more alcohol functions, such as diols or polyalcohols for example) such as ethanol and/or methanol, glycol, ethylene glycol, diethylene glycol, propylene glycol or organic acid, for example and mixtures thereof. The use of alcohol, such as ethanol, is quite interesting as it enables to use the alcohol as useful fuel source. The content of additive in the water is for example comprised between 2 and 50%, or even more, but is advantageously comprised between 5 and 20% by weight (for example an aqueous medium containing 8 to 15% volume ethanol).

Figure 7 is a schematic view of a central unit for controlling the combustion, as well as the regeneration/rejuvenation operation.

Said central unit 100 receives from various sensors 101 (possibly via other central unit) information about various parameters, such as :
- temperature of the hot water 102 (in the tank 7 1 B and the reservoir 72B); for example as long as the temperature has not reached a minimal temperature, the unit controls the working so that no water injection is made in the combustion chamber;
- temperature of the cooling agent of the motor 103 ; for example, as long as the temperature of the cooling agent is lower than a minimum temperature (for example 75°C), the central unit controls the injection of water and of a minimum amount of cerium/europium/ytterbium / praseodymium ;
- fuel consumption 104; for example in case the fuel consumption is reduced to less than a predetermined value, no cerium/europium/ ytterbium / praseodymium is injected in the combustion chamber and/or in case the fuel consumption is higher than a predetermined value, at least a minimal amount of cerium/europium is injected in the combustion chamber;
- speed variation or acceleration or gear change or variation of the rotation speed 105, for example, as soon as a variation of more than a predetermined value is determined within a time period, at least a minimum amount of cerium/europium is injected in the combustion chamber;
- deceleration or motor brake 106; for example when a deceleration or motor brake is determined, water or water vapor with a minimum amount of cerium/europium is injected in the combustion chamber so as to provide a minimum regeneration of the catalyst coating, prior to the following acceleration ;
- speed 107, for example as long as the speed is lower than a minimum value, water or water vapor and at least a minimum amount of cerium/europium are injected is the combustion chamber ;
- fuel characteristics 108 ;
- NOx content in the flue gases (109) ; for example As long as the NOₓ mobile average content on a period of 15 minutes is lower than a predetermined threshold value (M, for example corresponding to 1.3 x the requested average RA), no regeneration of the catalyst coating is operated by admission of cerium and/or europium compound in the combustion chamber. When the NOₓ mobile average content on a period of 15 minutes is higher than the predetermined threshold value (M, for example corresponding to 1.3 x the requested average Era), regeneration of the catalyst coating is operated by admission of cerium and/or europium compound in the combustion chamber. Said regeneration is for example carried out up to reaching a minimum threshold value (m, for example a value corresponding to about 0.7 x the requested average RA).
- Brake 110 ; for example as soon as a braking is carried out, more water or water vapor is injected in the combustion chamber
- Air flow 111,
- Water content 112 of the reservoir used for feeding the cerium/europium/ytterbium/praseodymium in the combustion chamber
- Water content 113 of the water free of additive to be directly injected in the combustion chamber
- Status of the filter and/or soot trap system 114 (drop of pressure between inlet and outlet; soot content in the flue gases)
- Etc.

The central unit controls for example the water (vapor) injection before and/or in and/or after the combustion chamber, for example for limiting the peak temperature in the combustion chamber and/or in the exhaust, such as for avoiding the burning of valves and/or for avoiding a soot burning when not required in the exhaust treatment system. The central unit can thus be programmed so as to avoid the 5% CO admitted content in case of high rpm.

The control unit 100 controls for example the valves 70B,71B and 72B, as well as can emit signal corresponding to an efficient working or to a defect of working.

The control unit can also possibly control direct injection of water vapor and/or air and/or cerium additives in the exhaust, i.e. in combustion flue gases, for example in the exhaust manifold, in the recycling system of flue gases, in the exhaust pipe before and/or after the filter, but before the soot trap system.

As, the water content in the flue gases is quite high, it is advantageous to provide the exhaust pipe with a system for collecting at least part of said water vapor.

Hereafter a description is given to various processes in which the combustion chamber is provided with a NOₓ reducing catalyst and in which the combustion flue gases are at least treated in a soot collector.

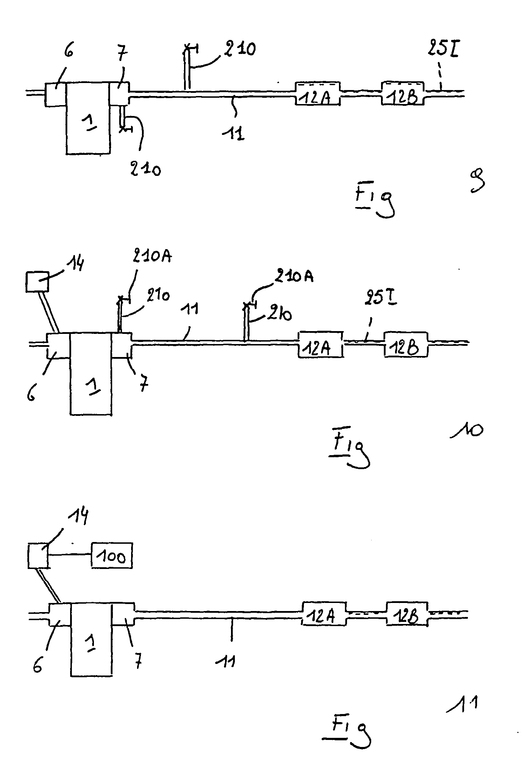

### Process 1 (figure 9)

In this process, the regeneration or rejuvenation of the NOₓ reducing catalyst of the combustion chamber 1 is carried out so as to not induce the regeneration or rejuvenation of the soot collector 12B and whereby the regeneration or rejuvenation of the soot collector 12B is carried out intermittently when required. For example the cerium concentration in the flue gases is as low, as to be not sufficient for reducing the ignition temperature of the soot present in the soot collector below the temperature of the flue gases in contact with the soot, and/or the treatment of the combustion chamber is carried during a period sufficient for regenerating the catalyst of the combustion chamber, but not sufficient for reducing the ignition temperature of the soot in contact with the flue gases in the soot collector.

Reference 251 designates in the figures 22 to 26 a cerium containing coating.

Possibly, in order to avoid a possible ignition of the soot in the soot collector during the regeneration of the catalyst present in the combustion chamber, it is possible to add air and/or water vapor (inlet 210) to the flue gases exhausting the combustion chamber before their passage into the soot collector (for example in the pipe 11 and/or in the exhaust manifold 7), so as to reduce the temperature of the exhaust gases.

The regeneration of the soot collector is advantageously carried out just after a regeneration or rejuvenation step of the catalyst of the combustion chamber, for example less than 10minutes after the regeneration step of the catalyst (advantageously less than 5 minutes, preferably less than 3 minutes).

### Process 2 (figure 10)

Water vapor with a minimum amount of cerium is admitted (for example by means of a device 14) continuously in the inlet manifold (6) of the combustion chamber (1), so as to ensure a continuous regeneration of the catalyst present in the combustion chamber. For example, the cerium added in the inlet manifold 6 (controlled rate of admission) is such that the flue gases comprise less than 2ppm cerium, advantageously less than 1 ppm, such as 500ppb, 200ppb, 100ppb or even lesser.

When the regeneration or rejuvenation of the soot trap system is required, a further amount of cerium (increased rate of cerium admission) is admitted in the inlet manifold (6), so as to increase the cerium concentration in the flue gases to more than 2ppm, advantageously more than 5ppm, preferably more than 10ppm, such as between 10 and 20ppm. Said further amount of cerium (increased cerium admission rate) is added during a period sufficient for reducing the soot ignition temperature below the temperature of the flue gases temperature and for inducing the ignition of the soot.

As soon as the soot is ignited, only water vapor with a minimum amount of cerium is possibly admitted continuously in the inlet manifold, so as to ensure a continuous regeneration of the catalyst present in the combustion chamber. For example, the cerium added in the inlet manifold is such that the flue gases comprise less than 2ppm cerium, advantageously less than 1ppm, such as 500ppb, 200ppb, 100ppb or even lesser.

Possibly during the higher rate of admission of cerium in the inlet manifold, water vapor and/or air is admitted in the pipe 11 or outlet manifold 7 via the pipe 210 with valve 210A, so as to lower the temperature of the flue gases. When a sufficient amount of cerium is admitted in the soot collector (for example after an admission at a higher rate for a period of 30 seconds up to 10minutes, advantageously less than 5 minutes, preferably less than 3 minutes) the admission of water vapor and air via the pipe 210 is controlled (for example stopped possibly only briefly) so that the flue gases contacting the soot collector have a temperature sufficient for igniting the soot and have a temperature sufficient so that the combustion of the soot can be continued for a proper regeneration.

### Process 3 (figure 11)

In this process, the admission of water vapor and cerium in the inlet manifold (6) (device 14 controlled with the central computing system 100) is controlled according to various parameters, among which the temperature of the motor.

As long as the motor has not reached a minimum temperature or that the cooling medium has not reached a minimum temperature, no cerium is admitted in the inlet manifold.

A low admission rate of cerium is ensured when the regeneration of the catalyst of the combustion chamber is required, while said admission rate is increased during a short period when the soot collector has to be regenerated.

According to an advantageous embodiment, the regeneration of the soot collector is carried out when the car is moving at a speed of at least 70km/h, preferably at least 80km/h.

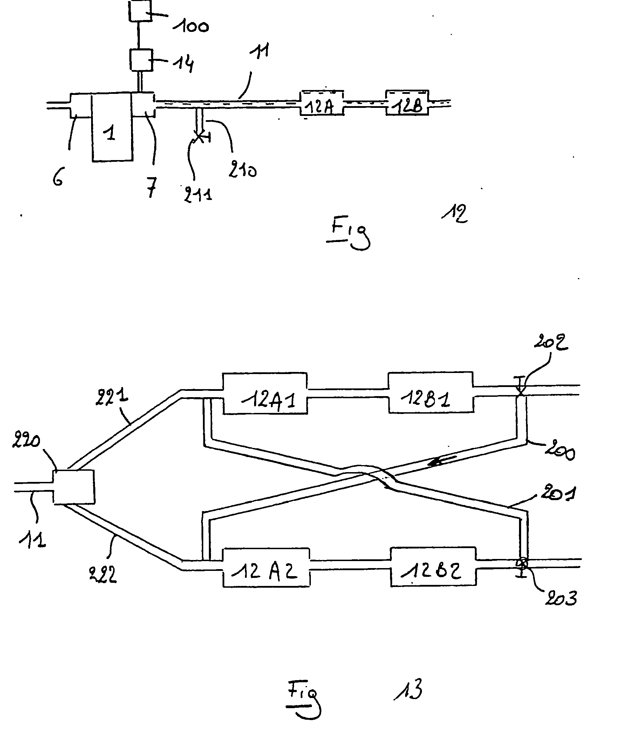

### Process 4 (figure 12)

In this process, the combustion chamber is not submitted to a treatment with cerium and/or water vapor, so as to control the fuel combustion.

The soot collector 12B is regenerated by admitting in the exhaust manifold 7 cerium and water vapor at a controlled rate (for example by a system like the system 14, said system being controlled by the central unit 100), so that the flue combustion gases are enriched with water vapor and with cerium. The water concentration of the flue gases is advantageously increased of at least 3% by volume (such as at least 5%, for example from 5% by volume up to 10% by volume). The cerium concentration in the flue gases is controlled so as to have a cerium content in the flue gases of 5 to 20ppm.

The cerium admission is carried out during a time sufficient for lowering the soot ignition temperature of at least 100°C, such as from 100°C to 250°C.

When a sufficient lowering of the soot ignition temperature is reached and/or when the soot is self ignited, the cerium admission is stopped. The water vapor admission is advantageously continued so as to control the temperature of the soot combustion. The invention relates thus also to a process o combustion with soot trapping, in which the burning step of the soot is controlled or prevented by admission of water or water vapor before/in/after the combustion chamber, nd/or in which the maximum peak temperature is lowered or maintained below a predetermined value, by admitting water and/or water vapor before and/or in the combustion chamber.

Advantageously, the regeneration is carried out after admission of a sufficient amount of cerium in the soot collector (for example after an admission at a higher rate for a period of 30 seconds up to 10minutes, advantageously less than 5 minutes, preferably less than 3 minutes). In order to prevent a possible regeneration during the cerium admission, the admission of water vapor and air via the pipe 210 is controlled so as to maintain the temperature of the flue gases below the ignition temperature of the soot. As soon as a sufficient amount of cerium is present in the soot collector, the admission of cerium is stopped, while the admission of water vapor and/or air is controlled (for example stopped possibly only briefly) so that the flue gases contacting the soot collector have a temperature sufficient for igniting the soot and have a temperature sufficient so that the combustion of the soot can be continued for a proper regeneration.

### Process 5 (figure 13 showing only the exhaust treatment system)

The processes 1 to 4 has been repeated, except that the combustion chamber 1 is associated to two soot collectors 12B1,12B2 and two filters 12A1,12A2, said collectors being adapted for receiving flue combustion gases (from pipe 11, via a controllable distributor 220 and pipes 221,222; the distributor 220 controlling the rate of flue gases exhausted towards the filter 12A1 and towards the filter 12A2) and being provided with pipes 200,201 and valves 202,203, so as to connect the exhaust of one soot collector 12B1 to the inlet of the other soot collector 12B2 (possibly of the filter 12A2 of said other soot collector), and vice versa. For directing at least partly the flue gases of the soot collector 12B1 towards the inlet of the soot collector 12B2, the valve 202 is closed (at least partly, preferably substantially completely).

This embodiment is advantageous, so as to filter and collecting possible soot particles escaping during the regeneration of one soot collector. Furthermore, it enables a better use of the cerium added.

When the soot collector 12B1 is regenerated, the other soot collector 12B2 is not regenerated. Possibly, water vapor and/or air is admitted in the flue combustion gases (for example issuing from the soot combustion) so as to lower the flue gases temperature below the temperature of soot ignition in the soot collector 12B2.

The processes disclosed in figures 22 to 26 can also be operated with compound containing europium, ytterbium, praseodymium instead of cerium and/or in admixture with cerium.

## Claims

1. Process of combustion of a combustible material in a combustion chamber associated at least with admission means conducting and admitting an oxygen containing gas in the combustion chamber and exhaust means exhausting combustion flue gases out of the chamber and conducting flue gases towards an outlet system, in which:
- the combustion chamber and/or the outlet system is provided with a catalyst and/or filtering and/or trapping support adapted to contact combustion flue gases, and
- the catalyst and/or filtering and/or trapping support is regenerated or rejuvenated intermittently by contacting it intermittently with a composition containing at least one atom selected from the group consisting of cerium, europium, ytterbium, praseodymium, neodymium (Nd) and mixtures thereof, in presence of combustion gases with a water vapor volume content of at least 15%, at a temperature higher than 200°C.

2. The process of claim 1, in which said catalyst is a primary NOₓ reducing catalyst and is treated with an effective amount of a composition comprising at least one atom selected from the group consisting of cerium, europium and mixture thereof, said effective amount being selected so as to avoid at the outlet substantially any emission of nanoparticles comprising at least one atom selected from the group consisting of cerium, europium, ytterbium, praseodymium and mixtures thereof.

3. The process of claim 1, in which the intermittent regeneration or rejuvenation of the catalyst and/or filtering and/or trapping support is carried out when at least one parameter characterizing the exhaust combustion flue gases has an average value greater than a maximum admitted value or lower than a minimum requested value.

4. The process of claim 1, in which the intermittent regeneration or rejuvenation of the catalyst and/or filtering and/or trapping support is carried out when the exhaust system comprises a soot content greater than a predetermined value.

5. The process of claim 1, in which the intermittent regeneration or rejuvenation of the catalyst and/or filtering and/or trapping support is carried out when the exhaust system has a gas flow resistance greater than a predetermined value.

6. The process of claim 1, in which the catalyst and/or filtering and/or trapping support is at least present in the exhaust system.

7. The process of claim 1, in which the intermittent regeneration is carried out in presence of combustion flue gases by admitting water vapor into the flue gases.

8. The process of claim 1, in which the intermittent regeneration is carried out by adding water vapor to the combustible material and/or to the oxygen containing gas to be introduced in the combustion chamber or by injecting water vapor in the combustion chamber.

9. The process of claim 1, in which the catalytic and/or filtering and/or trapping support is a filtering support for collecting soot particles from the combustion flue gases.

10. The process of claim 1, in which the catalytic support is a NOₓ reducing catalytic surface of at least an element selected from the group consisting of the combustion chamber, converter, admission means in contact with flue gases, exhaust means, outlet system, filtering means, trapping means, exhaust gas recirculation (EGR) and combinations thereof.

11. The process of claim 10, in which the catalytic support is at least partly provided with a primary NOₓ reducing catalyst, whereby said primary NOₓ reducing catalyst is present in an effective amount for ensuring a first average reduced NOₓ content in the flue gases, said average being measured for a combustion time of one hour.

12. The process of claim 11, in which the primary NOₓ reducing catalyst is treated with a composition containing at least one atom selected from the group consisting of cerium, europium, ytterbium, praseodymium, neodymium (Nd) and mixtures thereof, in presence of at least a gaseous medium comprising at least a gas selected from the group consisting of water vapor, combustion gases and mixtures thereof, at a temperature higher than 200°C, whereby said primary NOₓ reducing catalyst is treated with an effective amount of said composition for maintaining an average reduced NOₓ content in a range lower than 5 times the first average reduced NOₓ content.

13. The process of claim 12, in which said primary NOₓ reducing catalyst is treated with an effective amount of said composition for maintaining an average reduced NOₓ content within the range 0.3 to 3 times the first average reduced NOₓ content.

14. The process of claim 12, in which the treatment of the primary NOₓ reducing catalyst is operated in presence of at least a hydrated aluminum silicate.

15. The process of claim 12, in which said primary NOₓ reducing catalyst is treated with an effective amount of a composition comprising at least one atom selected from the group consisting of cerium, europium and mixture thereof, said effective amount being selected so as to avoid at the outlet substantially any emission of nanoparticles comprising at least one atom selected from the group consisting of cerium, europium, ytterbium, praseodymium and mixtures thereof.

16. The process of claim 12, in which the primary NOₓ reducing catalyst forms a coating of at least a portion of an inner wall of the combustion chamber.

17. The process of claim 12, in which the primary NOₓ reducing catalyst forms a coating of at least a portion of an inner wall of the combustion chamber, said coating consisting of adjacent catalytic spots.

18. The process of claim 12, in which the combustion gases flowing out of the combustion chamber are submitted to a treatment selected from the group consisting of filtering, washing, treatment in a reactor, absorbing, trapping and combinations thereof, before being exhausted via an outlet, and in which at least one element selected from the group consisting of filtering means, washing means, means conducting the flue gases from the combustion chamber to the filter, means conducting the flue gases from the combustion chamber to the washing means, and combinations thereof is provided at least partly with a NOₓ reducing catalyst coating.

19. The process of claim 12, in which combustion flue gases are partly recycled in the combustion chambre via a recycling conducting means and in which the recycling means conducting flue gases towards the combustion chamber is at least partly provided with a NOₓ reducing catalyst coating.

20. The process of claim 19, in which the combustion gases recycled in the combustion chamber are at least partly submitted to a treatment selected from the group consisting of filtration, washing, absorption, conversion, trapping and combinations thereof.

21. The process of claim 12, in which the primary NOₓ reducing catalyst comprises at least one atom selected from the group consisting of Ce, Nd, Pt, Pd, Cu, W, Pr, Sc, Ga, Ru, Mo, Ni, Ti, Rh, Mg, Ca, La, Eu, Y, Yb, Si and mixtures thereof.

22. The process of claim 12, in which the primary NOₓ reducing catalyst is a coating deposited under controlled conditions.

23. The process of the claim 22, in which the primary NOₓ reducing catalyst coating is after being deposited submitted to at least one treatment step selected among the group consisting of heating step at a temperature higher than 200°C, a washing step, a gas blowing step, a control step of the efficiency of the coating, a control step of the properties of the coating, a control step of characteristics of the coating, and combinations thereof.

24. The process of claim 1, in which a means determines at least roughly the NOₓ content of the combustion gases at different times and in which said means controls the treatment of the primary NOₓ reducing catalyst when the determined NOₓ content is above a threshold value.

25. The process of claim 1, in which a means determines at least roughly the NOₓ content of the combustion gases at different times and in which said means stops the treatment of the primary NOₓ reducing catalyst when the determined NOₓ content is lower than a threshold value.

26. The process of claim 12, in which the primary NOₓ reducing catalyst forms a coating having substantially uniform characteristics.

27. The process of claim 12, in which the treatment of the primary catalyst coating is carried out by contacting said coating with a gaseous medium containing at least one additive selected from the group consisting of cerium containing compounds, europium containing compounds, compounds containing cerium and europium, cerium containing particles, europium containing particles, particles containing cerium and europium, ytterbium containing compounds, praseodymium containing compounds, compounds containing cerium and ytterbium, ytterbium containing particles, praseodymium containing particles, particles containing cerium and ytterbium, particles containing cerium and praseodymium, and mixtures thereof, said contact treatment being carried out at least partly at a temperature higher than 400°C.

28. The process of claim 12, in which a compound selected from the group consisting of compounds containing cerium, compounds containing europium, compounds containing cerium and europium, compounds containing ytterbium, compounds containing praseodymium, compounds containing cerium and ytterbium, compound containing cerium and praseodymium and mixtures thereof is contacted with a gaseous medium containing at least water vapor so as to form a gaseous medium containing at least one element selected from the group consisting of cerium, europium and mixtures thereof, said gaseous medium being conducted in the combustion chamber.

29. The process of claim 12, in which a compound selected from the group consisting of compounds containing cerium, compounds containing europium, compounds containing cerium and europium, compounds containing ytterbium, compounds containing praseodymium, compounds containing cerium and ytterbium, compound containing cerium and praseodymium and mixtures thereof is contacted with a gaseous medium containing at least water vapor so as to form a gaseous medium containing at least one element selected from the group consisting of cerium, europium, ytterbium, praseodymium and mixtures thereof, whereby said gaseous medium containing at least one compound comprising at least one atom selected from the group consisting of cerium, europium, ytterbium, praseodymium and mixtures thereof is formed in the combustion chamber.

30. The process of claim 12, in which a compound selected from the group consisting of compounds containing cerium, compounds containing europium, compounds containing cerium and europium, compounds containing ytterbium, compounds containing praseodymium, compounds containing cerium and ytterbium, compound containing cerium and praseodymium and mixtures thereof is contacted with a gaseous medium containing water vapor having a temperature comprised between 20°C and 90°C, so as to form a gaseous medium containing at least one element selected from the group consisting of cerium, europium, ytterbium, praseodymium, neodymium and mixtures thereof, said gaseous medium being then conducted in the combustion chamber.

31. The process of claim 12, in which a compound selected from the group consisting of compounds containing cerium, compounds containing europium, compounds containing cerium and europium, compounds containing ytterbium, compounds containing praseodymium, compounds containing cerium and ytterbium, compound containing cerium and praseodymium and mixtures thereof is contacted with an aqueous medium, and in which aqueous medium containing at least one element selected from the group consisting of cerium, europium, ytterbium, praseodymium and mixtures thereof is admitted in the combustion chamber for forming a water vapor gaseous medium for treating the primary NOₓ reducing catalyst.

32. The process of claim 12, in which the treatment of the primary NOₓ reducing catalyst is further controlled in function of at least one parameter selected from the group consisting of charge or load of the combustion motor, combustible flow, air flow, speed of the combustion motor, air/combustible mixture, speed variation level, gear variation, temperature, acceleration, brake, and combinations thereof.

33. The process of claim 12, in which an aqueous medium substantially free of cerium and europium and ytterbium and praseodymium and neodymium is admitted in the combustion chamber between two admissions in the combustion chamber of an aqueous medium comprising at least one atom selected from the group consisting of cerium, europium, ytterbium, neodymium, praseodymium and mixtures thereof.

34. The process of claim 12, in which a medium substantially free of cerium and europium selected from the group consisting of aqueous medium, alcohol medium, glycol medium and combinations thereof is admitted in the combustion chamber between two admissions in the combustion chamber of a medium selected from the group consisting of water vapor containing cerium, water vapor containing europium, water containing cerium, water containing europium, alcohol medium containing cerium, alcohol medium containing europium, glycol medium containing cerium, glycol medium containing europium, water vapor containing ytterbium, water vapor containing praseodymium, water containing ytterbium, water containing praseodymium, alcohol medium containing ytterbium, alcohol medium containing praseodymium, glycol medium containing ytterbium, glycol medium containing praseodymium, medium containing neodymium, and combinations thereof.

35. The process of claim 12, in which the combustion chamber is a combustion chamber of an internal combustion engine.

36. The process of claim 12, in which the combustion is operated in presence of at least one compound selected from the group consisting of water vapor, glycol, alcohol, aldehyde, organic acid and mixtures thereof.

37. The process of claim 36, in which the combustion is operated in presence of at least one compound selected from the group consisting of water, water vapor, glycol, alcohol, aldehyde, organic acid and mixtures thereof, said compound being directly injected in the combustion chamber.

38. The process of claim 12, in which the combustion is operated in presence of nanoparticles of a hydrated aluminum silicate, the weight ratio (rare earth containing compounds)/(hydrated aluminum silicate) being lower than 50.

39. The process of claim 1, in which the combustion chamber is provided with a NOₓ reducing catalyst and in which the combustion flue gases are at least treated in a soot collector, whereby the regeneration or rejuvenation of the NOₓ reducing catalyst of the combustion chamber is carried out so as to not induce the regeneration or rejuvenation of the soot collector and whereby the regeneration or rejuvenation of the soot collector is carried out intermittently when required.

40. The process of claim 1, in which the combustion chamber is provided with a NOₓ reducing catalyst and in which the combustion flue gases are at least treated in a soot collector, whereby the regeneration or rejuvenation of the NOₓ reducing catalyst of the combustion chamber is carried out so as to not induce the regeneration or rejuvenation of the soot collector, while the regeneration or rejuvenation of the soot collector is carried out when the NOₓ reducing catalyst of the combustion chamber has been regenerated or is regenerated or without inducing a regeneration or rejuvenation of the NOₓ reducing catalyst, preferably following substantially immediately a step of regeneration or rejuvenation of the NOₓ reducing catalyst.

41. The process of claim 1, in which the combustion chamber is provided with a NOₓ reducing catalyst and in which the combustion flue gases are at least treated in a soot collector, whereby the regeneration or rejuvenation of the NOₓ reducing catalyst of the combustion chamber is carried out so as to not lower the ignition temperature of soot in the soot collector to a temperature of at most 50°C, advantageously at most 30°C lower to the ignition temperature of the soot in the trap system when no or substantially no composition containing at least one atom selected from the group consisting of cerium, europium, ytterbium, praseodymium, neodymium and mixtures thereof is admitted.

42. The process of claim 1, in which the combustion chamber is provided with a NOₓ reducing catalyst and in which the combustion flue gases are at least treated in a soot collector, whereby the regeneration or rejuvenation of the soot collector is carried out so as to lower the ignition temperature of soot in the soot collector to a temperature at least 50°C, advantageously at least 100°C, lower to the ignition temperature of the soot in the trap system when no or substantially no composition containing at least one atom selected from the group consisting of cerium, europium, ytterbium, praseodymium and mixtures thereof is admitted.

43. The process of claim 1, in which the combustion chamber is provided with a NOₓ reducing catalyst and in which the combustion flue gases are at least treated in a soot collector, whereby the regeneration or rejuvenation of the soot collector is carried out by contacting flue gases in the soot collector with a composition containing at least one atom selected from the group consisting of cerium, europium, ytterbium, praseodymium, neodymium and mixtures thereof, during a period of time shorter than the period of time required for initializing the regeneration of the soot collector by contacting said soot collector with flue gases in presence of a composition containing at least one atom selected from the group consisting of cerium, europium, ytterbium, praseodymium and mixtures thereof.

44. The process of claim 1, in which the combustion chamber is provided with a NOₓ reducing catalyst and in which the combustion flue gases are at least treated in a soot collector, whereby the regeneration or rejuvenation of the soot collector is carried out by contacting said soot collector with flue gases in presence of an amount of a composition containing at least one atom selected from the group consisting of cerium, europium, ytterbium, praseodymium, neodymium and mixtures thereof which is greater than the amount of composition containing at least one atom selected from the group consisting of cerium, europium, ytterbium, praseodymium and mixtures thereof required for regenerating or rejuvenating the NOₓ reducing catalyst of the combustion chamber.

45. The process of claim 1, in which the combustion chamber is provided with a NOₓ reducing catalyst and in which the combustion flue gases are at least treated in a soot collector, whereby the regeneration or rejuvenation of the soot collector is carried out by contacting the soot collector with flue gases with a concentration of at least one atom selected from the group consisting of cerium, europium, ytterbium, praseodymium, neodymium and mixtures thereof which is greater than the concentration of at least one atom selected from the group consisting of cerium, europium, ytterbium, praseodymium and mixtures thereof in the flue gases required for regenerating or rejuvenating the NOₓ reducing catalyst of the combustion chamber.

## Patentansprüche

1. Verfahren zur Verbrennung eines verbrennbaren Materials in einer Verbrennungskammer, die mindestens mit Einlassmitteln, die ein Sauerstoff-enthaltendes Gas leiten und in die Verbrennungskammer einlassen und Auslassmitteln, die Verbrennungsgase aus der Kammer ablassen und Abgase in Richtung eines Auslasssystems leiten, verbunden ist, worin:
- die Verbrennungskammer und/oder das Auslasssystem ausgestattet ist mit einem Katalysator und/oder einem filternden und/oder einfangenden Träger, der geeignet ist mit Verbrennungsabgasen in Kontakt zu treten und
- worin der Katalysator und/oder filternde und/oder einfangende Träger periodisch regeneriert oder wiederhergestellt wird indem er periodisch in Kontakt gebracht wird mit einer Zusammensetzung, die mindestens ein Atom enthält, ausgewählt aus der Gruppe, bestehend aus Cer, Europium, Ytterbium, Praseodym, Neodym (Nd) und Gemischen davon, in der Gegenwart von Verbrennungsgasen mit einem Wasserdampfvolumengehalt von mindestens 15 % bei einer Temperatur von höher als 200 °C.

2. Verfahren nach Anspruch 1, worin der Katalysator ein primärer NOₓ-reduzierender Katalysator ist und behandelt wird mit einer wirkungsvollen Menge einer Zusammensetzung, umfassend mindestens ein Atom, ausgewählt aus der Gruppe, bestehend aus Cer, Europium und einem Gemisch davon, wobei die wirksame Menge so ausgewählt wird, um am Auslass im Wesentlichen eine Emission von Nanoteilchen zu vermeiden, die mindestens ein Atom umfassen, ausgewählt aus der Gruppe, bestehend aus Cer, Europium , Ytterbium, Praseodym und Gemischen davon.

3. Verfahren nach Anspruch 1, worin die periodische Regeneration oder Wiederherstellung des Katalysators und/oder filternden und/oder einfangenden Trägers durchgeführt wird wenn mindestens ein Parameter, der die Auslassverbrennungsabgase charakterisiert, einen mittleren Wert aufweist, der größer ist als ein maximal gelassener Wert oder geringer ist als ein geforderter Minimalwert.

4. Verfahren nach Anspruch 1, worin die periodische Regeneration oder Wiederherstellung des Katalysators und/oder filtrierenden und/oder einfangenden Trägers durchgeführt wird wenn das Abgassystem einen Rußgehalt umfasst der größer als ein vorbestimmter Wert ist.

5. Verfahren nach Anspruch 1, worin die periodische Regeneration oder Wiederherstellung des Katalysators und/oder filtrierenden und/oder einfangenden Trägers durchgeführt wird wenn das Abgassystem einen Gasstromwiderstand aufweist der größer als ein vorbestimmter Wert ist.

6. Verfahren nach Anspruch 1, worin der Katalysator und/oder filternde und/oder einfangende Träger zumindest in dem Abgassystem vorliegt.

7. Verfahren nach Anspruch 1, worin die periodische Regeneration in der Gegenwart von Verbrennungsabgasen durch Zuführen von Wasserdampf in die Abgase durchgeführt wird.

8. Verfahren nach Anspruch 1, worin die periodische Regeneration durchgeführt wird durch Zugeben von Wasserdampf zu dem verbrennbaren Material und/oder zu dem Sauerstoff-enthaltenden Gas, das in die Verbrennungskammer eingeleitet werden soll oder durch Einspritzen von Wasserdampf in die Verbrennungskammer.

9. Verfahren nach Anspruch 1, worin der Katalysator und/oder - filternde und/oder einfangende Träger ein filternder Träger ist zum Sammeln von Rußteilchen aus den Verbrennungsabgasen.

10. Verfahren nach Anspruch 1, worin der Katalysatorträger eine NOₓ-reduzierende katalytische Oberfläche mindestens eines Elements ist, ausgewählt aus der Gruppe, bestehend aus der Verbrennungskammer, dem Konverter, Einlassmitteln, die in Kontakt mit Verbrennungsgasen sind, Abgasmitteln, dem Auslasssystem, Filtermitteln, Einfangmitteln, Abgasrückführung (EGR) und Kombinationen davon.

11. Verfahren nach Anspruch 10, worin der Katalysatorträger zumindest teilweise bereitgestellt wird mit einem primären NOₓ-reduzierenden Katalysator, worin der primäre NOₓ-reduzierende Katalysator in einer wirkungsvollen Menge vorliegt zum Sicherstellen eines ersten mittleren Gehaltes von reduziertem NOₓ in den Abgasen, wobei das Mittel für eine Verbrennungszeit von einer Stunde gemessen wird.

12. Verfahren nach Anspruch 11, worin der primäre NOₓ-reduzierende Katalysator behandelt wird mit einer Zusammensetzung, enthaltend mindestens ein Atom ausgewählt aus der Gruppe, bestehend aus Cer, Europium, Ytterbium, Praseodym, Neodym (Nd) und Gemischen davon, in der Gegenwart mindestens eines gasförmigen Mediums, umfassend mindestens ein Gas, ausgewählt aus der Gruppe, bestehend aus Wasserdampf, Verbrennungsgasen und Gemischen davon, bei einer Temperatur von höher als 200 °C, wobei der primäre NO ₓ-reduzierende Katalysator mit einer wirkungsvollen Menge der Zusammensetzung behandelt wird zum Aufrechterhalten eines mittleren Gehaltes von reduziertem NOₓ in einem Bereich, der geringer ist als das 5-fache des ersten mittleren Gehalts von reduziertem NOₓ.

13. Verfahren nach Anspruch 12, worin der primäre NOₓ-reduzierender Katalysator behandelt wird mit einer wirkungsvollen Menge der Zusammensetzung zum Aufrechterhalten eines mittleren reduzierten NOₓ-Gehalts innerhalb des Bereichs des 0,3 bis 3-fachen des ersten mittleren reduzierten NOₓ-Gehalts.

14. Verfahren nach Anspruch 12, worin die Behandlung des primären NOₓ-reduzierenden Katalysators in der Gegenwart mindestens eines hydratisierten Aluminiumsilikats durchgeführt wird.

15. Verfahren nach Anspruch 12, worin der primäre NOₓ-reduzierende Katalysator mit einer wirkungsvollen Menge einer Zusammensetzung behandelt wird, umfassend mindestens ein Atom, ausgewählt aus der Gruppe, bestehend aus Cer, Europium und einem Gemisch davon, wobei die wirkungsvolle Menge so ausgewählt wird, um am Auslass im Wesentlichen eine Emission von Nanoteilchen, umfassend mindestens ein Atom, ausgewählt aus der Gruppe, bestehend aus Cer, Europium, Ytterbium, Praseodym und Gemischen davon, zu vermeiden.

16. Verfahren nach Anspruch 12, worin der primäre NOₓ-reduzierende Katalysator eine Beschichtung von mindestens einem Teil einer Innenwand der Verbrennungskammer bildet.

17. Verfahren nach Anspruch 12, worin der primäre NOₓ-reduzierende Katalysator eine Beschichtung von mindestens einem Teil einer Innenwand der Verbrennungskammer bildet, wobei die Beschichtung aus benachbarten katalytischen Stellen besteht.

18. Verfahren nach Anspruch 12, worin die Verbrennungsgase, die aus der Verbrennungskammer strömen einer Behandlung unterzogen werden, ausgewählt aus der Gruppe, bestehend aus Filtrieren, Waschen, Behandlung in einem Reaktor, Absorbieren, Einfangen und Kombinationen davon, bevor sie über einen Auslass abgelassen werden, und worin mindestens ein Element, ausgewählt aus der Gruppe, bestehend aus Filtermittel, Waschmittel, Mittel zum Leiten des Abgases von der Verbrennungskammer zum Filter, Mittel zum Leiten der Abgase von der Verbrennungskammer zu den Waschmitteln und Kombinationen davon, zumindest teilweise mit einer NOₓ-reduzierenden Katalysatorbeschichtung bereitgestellt wird.

19. Verfahren nach Anspruch 12, worin die Verbrennungsabgase teilweise in die Verbrennungskammer über ein Rezyklierungsleitungsmittel zurückgeführt werden und worin das Rezyklierungsmittel, das Abgase in Richtung der Verbrennungskammer leitet, zumindest teilweise mit einer NOₓ-reduzierenden Katalysatorbeschichtung bereitgestellt wird.

20. Verfahren nach Anspruch 19, worin die Verbrennungsgase, die in die Verbrennungskammer zurückgeführt werden, zumindest teilweise einer Behandlung unterzogen werden, ausgewählt aus der Gruppe, bestehend aus Filtration, Waschen, Absorption, Konversion, Einfangen und Kombinationen davon.

21. Verfahren nach Anspruch 12, worin der primäre NOₓ-reduzierende Katalysator mindestens ein Atom umfasst, ausgewählt aus der Gruppe, bestehend aus Ce, Nd, Pt, Pd, Cu, W, Pr, Sc, Ga, Ru, Mo, Ni, Ti, Rh, Mg, Ca, La, Eu, Y, Yb, Si und Gemischen davon.

22. Verfahren nach Anspruch 12, worin der primäre NOₓ-reduzierende Katalysator eine Beschichtung ist, die unter kontrollierten Bedingungen abgeschieden wird.

23. Verfahren nach Anspruch 22, worin die primäre NOₓ-reduzierende Katalysatorbeschichtung nachdem sie abgeschieden ist, mindestens einem Behandlungsschritt unterzogen wird, ausgewählt aus der Gruppe, bestehend aus einem Erhitzungsschritt bei einer Temperatur von höher als 200 °C, einem Waschschritt, einem Gasblasschritt, einem Kontrollschritt der Wirksamkeit der Beschichtung, einem Kontrollschritt der Eigenschaften der Beschichtung, einem Kontrollschritt der Charakteristika der Beschichtung und Kombinationen davon.

24. Verfahren nach Anspruch 1, worin ein Mittel zumindest annähernd den NOₓ-Gehalt der Verbrennungsgase zu verschiedenen Zeiten bestimmt und worin das Mittel die Behandlung des primären NOₓ-reduzierenden Katalysators steuert wenn der bestimmte NOₓ-Gehalt über einem Schwellenwert ist.

25. Verfahren nach Anspruch 1, worin ein Mittel zumindest annähernd den NOₓ-Gehalt der Verbrennungsgase zu verschiedenen Zeiten bestimmt und worin das Mittel die Behandlung des primären NOₓ-reduzierenden Katalysators beendet wenn der bestimmte NOₓ-Gehalt geringer als ein Schwellenwert ist.

26. Verfahren nach Anspruch 12, worin der primäre NOₓ-reduzierende Katalysator eine Beschichtung mit im Wesentlichen gleichmäßigen Charakteristika bildet.

27. Verfahren nach Anspruch 12, worin die Behandlung der primären Katalysatorbeschichtung durchgeführt wird durch Inkontaktbringen der Beschichtung mit einem gasförmigen Medium, enthaltend mindestens ein Additiv, ausgewählt aus der Gruppe, bestehend aus Cer-enthaltenden Verbindungen, Europium-enthaltenden Verbindungen, Verbindungen, die Cer und Europium enthalten, Cer-enthaltenden Teilchen, Europium-enthaltenden Teilchen, Teilchen, die Cer und Europium enthalten, Ytterbium-enthaltenden Verbindungen, Praseodym-enthaltenden Verbindungen, Verbindungen, die Cer und Ytterbium enthalten, Ytterbium-enthaltenden Teilchen, Praseodym-enthaltenden Teilchen, Teilchen, die Cer und Ytterbium enthalten, Teilchen, die Cer und Praseodym enthalten, und Gemische davon, wobei die Kontaktbehandlung zumindest teilweise bei einer Temperatur durchgeführt wird, die höher ist als 400 °C ist.

28. Verfahren nach Anspruch 12, worin eine Verbindung, ausgewählt aus der Gruppe, bestehend aus Verbindungen, enthaltend Cer, Verbindungen, enthaltend Europium, Verbindungen, enthaltend Cer und Europium, Verbindungen, enthaltend Ytterbium, Verbindungen, enthaltend Praseodym, Verbindungen, enthaltend Cer und Ytterbium, eine Verbindung, enthaltend Cer und Praseodym, und Gemischen davon, in Kontakt gebracht wird mit einem gasförmigen Medium, enthaltend mindestens Wasserdampf, um ein gasförmiges Medium zu bilden, das mindestens ein Element enthält, ausgewählt aus der Gruppe, bestehend aus Cer, Europium und Gemischen davon, wobei das gasförmige Medium in die Verbrennungskammer geleitet wird.

29. Verfahren nach Anspruch 12, worin eine Verbindung, ausgewählt aus der Gruppe, bestehend aus Verbindungen, enthaltend Cer, Verbindungen, enthaltend Europium, Verbindungen, enthaltend Cer und Europium, Verbindungen, enthaltend Ytterbium, Verbindungen, enthaltend Praseodym, Verbindungen, enthaltend Cer und Ytterbium, eine Verbindung, enthaltend Cer und Praseodym und Gemische davon, in Kontakt gebracht wird mit einem gasförmigen Medium, enthaltend mindestens Wasserdampf, um ein gasförmiges Medium zu bilden, enthaltend mindestens ein Element, ausgewählt aus der Gruppe, bestehend aus Cer, Europium, Ytterbium, Praseodym und Gemische davon, wobei das gasförmige Medium mindestens eine Verbindung enthält, umfassend mindestens ein Atom, ausgewählt aus der Gruppe, bestehend aus Cer, Europium, Ytterbium, Praseodym und Gemischen davon, in der Verbrennungskammer gebildet wird.

30. Verfahren nach Anspruch 12, worin eine Verbindung, ausgewählt aus der Gruppe, bestehend aus Verbindungen, enthaltend Cer, Verbindungen, enthaltend Europium, Verbindungen, enthaltend Cer und Europium, Verbindungen, enthaltend Ytterbium, Verbindungen, enthaltend Praseodym, Verbindungen, enthaltend Cer und Ytterbium, eine Verbindung, enthaltend Cer und Praseodym und Gemische davon, in Kontakt gebracht wird mit einem gasförmigen Medium, das Wasserdampf mit einer Temperatur zwischen 20 °C und 90 °C enthält, um ein gasförmiges Medium zu bilden, das mindestens ein Element enthält, ausgewählt aus der Gruppe, bestehend aus Cer, Europium, Ytterbium, Praseodym, Neodym und Gemischen davon, wobei das gasförmige Medium dann in die Verbrennungskammer geleitet wird.

31. Verfahren nach Anspruch 12, worin eine Verbindung, ausgewählt aus der Gruppe, bestehend aus Verbindungen, enthaltend Cer, Verbindungen, enthaltend Europium, Verbindungen, enthaltend Cer und Europium, Verbindungen, enthaltend Ytterbium, Verbindungen, enthaltend Praseodym, Verbindungen, enthaltend Cer und Ytterbium, eine Verbindung, enthaltend Cer und Praseodym und Gemische davon, in Kontakt gebracht wird mit einem wässrigen Medium, und worin das wässrige Medium mindestens ein Element enthält, ausgewählt aus der Gruppe, bestehend aus Cer, Europium, Ytterbium, Praseodym und Gemischen davon, in die Verbrennungskammer eingelassen wird zum Bilden eines gasförmigen Wasserdampfmediums zum Behandeln des primären NOₓ-reduzierenden Katalysators.

32. Verfahren nach Anspruch 12, worin die Behandlung des primären NOₓ-reduzierenden Katalysators weiterhin gesteuert wird als Funktion mindestens eines Parameters, ausgewählt aus der Gruppe, bestehend aus Last oder Belastung des Verbrennungsmotors, Brennstofffluss, Luftstrom, Geschwindigkeit des Verbrennungsmotors, Luft/Brennstoffgemisch, Geschwindigkeitsvariationsgrad, Getriebevariation, Temperatur, Beschleunigung, Bremsen und Kombinationen davon.

33. Verfahren nach Anspruch 12, worin ein wässriges Medium, das im Wesentlichen frei von Cer und Europium und Ytterbium und Praseodym und Neodym ist, in die Verbrennungskammer eingelassen wird zwischen zwei Einlässen eines wässrigen Mediums, umfassend mindestens ein Atom, ausgewählt aus der Gruppe, bestehend aus Cer, Europium, Ytterbium, Neodym, Praseodym und Gemischen davon, in die Verbrennungskammer.

34. Verfahren nach Anspruch 12, worin ein Medium, das im Wesentlichen frei von Cer und Europium ist, ausgewählt aus der Gruppe, bestehend aus einem wässrigen Medium, Alkoholmedium, Glykolmedium und Kombinationen davon, eingelassen wird in die Verbrennungskammer zwischen zwei Einlässen eines Mediumsin die Verbrennungskammer, ausgewählt aus der Gruppe, bestehend aus Wasserdampf, enthaltend Cer, Wasserdampf, enthaltend Europium, Wasser, enthaltend Cer, Wasser, enthaltend Europium, Alkoholmedium, enthaltend Cer, Alkoholmedium, enthaltend Europium, Glykolmedium, enthaltend Cer, Glykolmedium, enthaltend Europium, Wasserdampf, enthaltend Ytterbium, Wasserdampf, enthaltend Praseodym, Wasser, enthaltend Ytterbium, Nasser, enthaltend Praseodym, Alkoholmedium, enthaltend Ytterbium, Alkoholmedium, enthaltend Praseodym, Glykolmedium, enthaltend Ytterbium, Glykolmedium, enthaltend Praseodym, Medium, enthaltend Neodym und Kombinationen davon.

35. Verfahren nach Anspruch 12, worin die Verbrennungskammer eine Verbrennungskammer eines Verbrennungsmotors ist.

36. Verfahren nach Anspruch 12, worin die Verbrennung in der Gegenwart mindestens einer Verbindung durchgeführt wird, ausgewählt aus der Gruppe, bestehend aus Wasserdampf, Glykol, Alkohol, Aldehyd, organische Säure und Gemischen davon.

37. Verfahren nach Anspruch 36, worin die Verbrennung in der Gegenwart mindestens einer Verbindung erfolgt, ausgewählt aus der Gruppe, bestehend aus Wasser, Wasserdampf, Glykol, Alkohol, Aldehyd, organische Säure und Gemischen davon, wobei die Verbindung direkt in die Verbrennungskammer eingespritzt wird.

38. Verfahren nach Anspruch 12, worin die Verbrennung in der Gegenwart von Nanoteilchen aus einem hydratisierten Aluminiumsilikat erfolgt, wobei das Gewichtsverhältnis (seltene Erde-enthaltende Verbindungen)/(hydratisiertes Aluminiumsilikat) kleiner als 50 ist.

39. Verfahren nach Anspruch 1, worin die Verbrennungskammer mit einem NOₓ-reduzierenden Katalysator bereitgestellt wird, worin die Verbrennungsabgase mindestens in einem Rußsammler behandelt werden, wobei die Regeneration oder Wiederherstellung des NOₓ-reduzierenden Katalysators der Verbrennungskammer so durchgeführt wird, dass nicht die Regeneration oder Wiederherstellung des Rußsammlers induziert wird und wobei die Regeneration oder Wiederherstellung des Rußsammlers periodisch durchgeführt wird, wenn dies erforderlich ist.

40. Verfahren nach Anspruch 1, worin die Verbrennungskammer mit einem NOₓ-reduzierenden Katalysator bereitgestellt wird, und worin die Verbrennungsabgase zumindest in dem Rußsammler behandelt werden, wobei die Regeneration oder Wiederherstellung des NOₓ-reduzierenden Katalysators der Verbrennungskammer so durchgeführt wird, um die Regeneration oder Wiederherstellung des Rußsammlers nicht zu induzieren, während die Regeneration oder Wiederherstellung des Rußsammlers durchgeführt wird, wenn der NOₓ-reduzierende Katalysator der Verbrennungskammer regeneriert worden ist oder regeneriert ist oder ohne Induzieren einer Regeneration oder Wiederherstellung des NOₓ-reduzierenden Katalysators, vorzugsweise im Wesentlichen unmittelbar nachfolgend auf einen Schritt der Regeneration oder Wiederherstellung des NOₓ-reduzierenden Katalysators.

41. Verfahren nach Anspruch 1, worin die Verbrennungskammer bereitgestellt wird mit einem NOₓ-reduzierenden Katalysator, und worin die Verbrennungsabgase zumindest behandelt werden in einem Rußsammler, wobei die Regeneration oder Wiederherstellung des NOₓ-reduzierenden Katalysators der Verbrennungskammer so durchgeführt wird, dass die Zündtemperatur von Ruß in dem Rußsammler nicht auf eine Temperatur von höchstens 50 °C, vorzugsweise maximal 30 °C niedriger als die Zündtemperatur des Rußes in dem Einfangsystem wenn keine oder im Wesentlichen keine Zusammensetzung vorliegt, die mindestens ein Atom enthält, ausgewählt aus der Gruppe, bestehend aus Cer, Europium, Ytterbium, Praseodym, Neodym und Gemischen davon, zugegeben wird, erniedrigt wird.

42. Verfahren nach Anspruch 1, worin die Verbrennungskammer mit einem NOₓ-reduzierenden Katalysator ausgestattet wird, und worin die Verbrennungsabgase zumindest in einem Rußsammler behandelt werden, wobei die Regeneration oder Wiederherstellung des Rußsammlers durchgeführt wird, um die Zündtemperatur von Ruß in dem Rußsammler auf eine Temperatur um mindestens 50°C, °C, vorzugsweise mindestens 100 °C geringer als die Zündtemperatur von Ruß in dem Einfangsystem zu erniedrigen wenn keine oder im Wesentlichen keine Zusammensetzung, die mindestens ein Atom enthält, ausgewählt aus der Gruppe, bestehend aus Cer, Europium, Ytterbium, Praseodym und Gemischen davon, zugegeben wird.

43. Verfahren nach Anspruch 1, worin die Verbrennungskammer mit einem NOₓ-reduzierenden Katalysator bereitgestellt wird und worin die Verbrennungsabgase zumindest in einem Rußsammler behandelt werden, wobei die Regeneration oder Wiederherstellung des Rußsammlers durchgeführt wird durch Inkontaktbringen von Abgasen in dem Rußsammler mit einer Zusammensetzung, die mindestens ein Atom enthält, ausgewählt aus der Gruppe, bestehend aus Cer, Europium, Ytterbium, Praseodym, Neodym und Gemischen davon, während einer Zeitdauer, die kürzer ist als die Zeitdauer ist, die erforderlich ist zum Initialisieren der Regeneration des Rußsammlers, durch Inkontaktbringen des Rußsammlers mit Abgasen in der Gegenwart einer Zusammensetzung, die mindestens ein Atom enthält, ausgewählt aus der Gruppe, bestehend aus Cer, Europium, Ytterbium, Praseodym und Gemischen davon.

44. Verfahren nach Anspruch 1, worin die Verbrennungskammer mit einem NOₓ-reduzierenden Katalysator ausgestattet wird, und worin die Verbrennungsabgase zumindest in einem Rußsammler behandelt werden, worin die Regeneration oder Wiederherstellung des Rußsammlers durchgeführt wird durch Inkontaktbringen des Rußsammlers mit Abgasen in der Gegenwart einer Menge einer Zusammensetzung, die mindestens ein Atom enthält, ausgewählt aus der Gruppe, bestehend aus Cer, Europium, Ytterbium, Praseodym, Neodym und Gemischen davon, die größer ist als die Menge Zusammensetzung, die mindestens ein Atom enthält, ausgewählt aus der Gruppe, bestehend aus Cer, Europium, Ytterbium, Praseodym und Gemischen davon, die erforderlich ist, zur Regeneration oder Wiederherstellung des NOₓ-reduzierenden Katalysators der Verbrennungskammer.

45. Verfahren nach Anspruch 1, worin die Verbrennungskammer mit einem NOₓ-reduzierenden Katalysator bereitgestellt wird, und worin die Verbrennungsabgase zumindest in einem Rußsammler behandelt werden, wobei die Regeneration oder Wiederherstellung des Rußsammlers durchgeführt wird durch Inkontaktbringen des Rußsammlers mit Abgasen mit einer Konzentration von mindestens einem Atom, ausgewählt aus der Gruppe, bestehend aus Cer, Europium, Ytterbium, Praseodym, Neodym und Gemischen davon, die größer ist als die Konzentration mindestens eines Atoms, ausgewählt aus der Gruppe, bestehend aus Cer, Europium, Ytterbium, Praseodym und Gemischen davon, in den Abgasen, die erforderlich ist zum Regenerieren oder Wiederherstellen des NOₓ-reduzierenden Katalysators der Verbrennungskammer.

## Revendications

1. Procédé de combustion d'un matériau combustible dans une chambre de combustion associée au moins à un moyen d'admission conduisant et laissant entrer un gaz contenant de l'oxygène dans la chambre de combustion et un moyen d'échappement évacuant des gaz de combustion hors de la chambre et conduisant les gaz de combustion vers un système d'échappement, dans lequel :
- la chambre de combustion et/ou le système d'échappement sont équipés d'un support de catalyseur et/ou de filtrage et/ou de piégeage conçu pour la mise en contact avec les gaz de combustion, et
- le support de catalyseur et/ou de filtrage et/ou de piégeage est régénéré ou réactivé de manière intermittente en le mettant en contact de manière intermittente avec une composition contenant au moins un atome sélectionné dans le groupe constitué du cérium, de l'europium, de l'ytterbium, du praséodyme, du néodyme (Nd) et des mélanges de ceux-ci, en présence de gaz de combustion avec une teneur en vapeur d'eau d'au moins 15%, à une température supérieure à 200°C.

2. Procédé suivant la revendication 1, dans lequel ledit catalyseur est un catalyseur primaire de réduction des NOₓ et est traité avec une quantité efficace d'une composition comprenant au moins un atome sélectionné dans le groupe constitué du cérium, de l'europium et de mélanges de ceux-ci, ladite quantité efficace étant sélectionnée de façon à éviter à la sortie toute émission substantielle de nanoparticules comprenant au moins un atome sélectionné parmi le groupe constitué du cérium, de l'europium, de l'ytterbium, du praséodyme et des mélanges de ceux-ci.

3. Procédé suivant la revendication 1, dans lequel la régénération ou réactivation intermittente du support de catalyseur et/ou de filtrage et/ou de piégeage est effectuée lorsqu'au moins un paramètre caractérisant les gaz de combustion a une valeur moyenne supérieure à une valeur maximale admise ou inférieure à une valeur minimale requise.

4. Procédé suivant la revendication 1, dans lequel la régénération ou réactivation intermittente du support de catalyseur et/ou de filtrage et/ou de piégeage est effectuée lorsque le système d'échappement comprend une teneur en suies supérieure à une valeur prédéterminée.

5. Procédé suivant la revendication 1, dans lequel la régénération ou réactivation intermittente du support de catalyseur et/ou de filtrage et/ou de piégeage est effectuée lorsque le système d'échappement a une résistance à l'écoulement du gaz supérieure à une valeur prédéterminée.

6. Procédé suivant la revendication 1, dans lequel le support de catalyseur et/ou de filtrage et/ou de piégeage est au moins présent dans le système d'échappement.

7. Procédé suivant la revendication 1, dans lequel la régénération intermittente est effectuée en présence de gaz de combustion en introduisant de la vapeur d'eau dans les gaz de combustion.

8. Procédé suivant la revendication 1, dans lequel la régénération intermittente est effectuée par addition de vapeur d'eau au matériau combustible et/ou au gaz contenant de l'oxygène à introduire dans la chambre de combustion ou par injection de vapeur d'eau dans la chambre de combustion.

9. Procédé suivant la revendication 1, dans lequel le support de catalyseur et/ou de filtrage et/ou de piégeage est un support de filtration pour la collecte de particules de suie des gaz de combustion.

10. Procédé suivant la revendication 1, dans lequel le support de catalyseur est une surface catalytique réductrice des NOₓ d'au moins un élément sélectionné parmi le groupe comprenant la chambre de combustion, le convertisseur, le moyen d'admission en contact avec les gaz de combustion, le moyen d'échappement, le système de sortie, le moyen de filtration, le moyen de piégeage, la recirculation des gaz d'échappement (EGR) et des combinaisons de ceux-ci.

11. Procédé suivant la revendication 10, dans lequel le support de catalyseur est au moins partiellement pourvu d'un catalyseur primaire de réduction des NOₓ, ledit catalyseur primaire de réduction des NOₓ étant présent en quantité efficace pour assurer une première teneur moyenne réduite des NOₓ dans les gaz de combustion, ladite moyenne étant mesurée pendant une durée de combustion d'une heure.

12. Procédé suivant la revendication 11, dans lequel le catalyseur primaire de réduction des NOₓ est traité avec une composition contenant au moins un atome sélectionné parmi le groupe constitué du cérium, de l'europium, de l'ytterbium, du praséodyme, du néodyme (Nd) et de mélanges de ceux-ci, en présence d'au moins un milieu gazeux comprenant au moins un gaz sélectionné parmi le groupe constitué de la vapeur d'eau, des gaz de combustion et de mélanges de ceux-ci, à une température supérieure à 200°C, ledit catalyseur primaire de réduction des NOₓ étant traité avec une quantité efficace de ladite composition afin de maintenir une teneur moyenne réduite en NOₓ dans une plage inférieure à 5 fois la première teneur moyenne réduite en NOₓ.

13. Procédé suivant la revendication 12, dans lequel ledit catalyseur primaire de réduction des NOₓ est traité avec une quantité efficace de ladite composition afin de maintenir une teneur moyenne réduite en NOₓ dans une plage de 0,3 à 3 fois la première teneur moyenne réduite en NOₓ.

14. Procédé suivant la revendication 12, dans lequel le traitement du catalyseur primaire de réduction des NOₓ est effectué en présence d'au moins un silicate hydraté d'aluminium.

15. Procédé suivant la revendication 12, dans lequel ledit catalyseur primaire de réduction des NOₓ est traité avec une quantité efficace d'une composition comprenant au moins un atome sélectionné dans le groupe constitué du cérium, de l'europium et de mélanges de ceux-ci, ladite quantité efficace étant sélectionnée de façon à éviter à la sortie toute émission substantielle de nanoparticules comprenant au moins un atome sélectionné parmi le groupe constitué du cérium, de l'europium, de l'ytterbium, du praséodyme et des mélanges de ceux-ci.

16. Procédé suivant la revendication 12, dans lequel ledit catalyseur primaire de réduction des NOₓ forme un revêtement d'au moins une partie d'une paroi interne de la chambre de combustion.

17. Procédé suivant la revendication 12, dans lequel ledit catalyseur primaire de réduction des NOₓ forme un revêtement d'au moins une partie d'une paroi interne de la chambre de combustion, ledit revêtement étant constitué de spots catalytiques adjacents.

18. Procédé suivant la revendication 12, dans lequel les gaz de combustion sortant de la chambre de combustion sont soumis à un traitement sélectionné parmi le groupe constitué de la filtration, du lavage, du traitement dans un réacteur, de l'absorption, du piégeage et des combinaisons de ceux-ci, avant d'être évacués via une sortie, et dans lequel au moins un élément sélectionné parmi le groupe constitué du moyen de filtration, du moyen de lavage, du moyen de conduction des gaz de combustion de la chambre de combustion au filtre, du moyen de conduction des gaz de combustion de la chambre de combustion au moyen de lavage, et des combinaisons de ceux-ci est fourni au moins partiellement avec un revêtement catalyseur de réduction des NOₓ.

19. Procédé suivant la revendication 12, dans lequel les gaz de combustion sont partiellement recyclés dans la chambre de combustion via un moyen conducteur de recyclage et dans lequel le moyen de recyclage conduisant les gaz de combustion vers la chambre de combustion est au moins partiellement pourvu d'un revêtement catalyseur de réduction des NOₓ.

20. Procédé suivant la revendication 19, dans lequel les gaz de combustion recyclés dans la chambre de combustion sont au moins partiellement soumis à un traitement sélectionné parmi le groupe constitué de la filtration, du lavage, de l'absorption, de la conversion, du piégeage et des combinaisons de ceux-ci.

21. Procédé suivant la revendication 12, dans lequel le catalyseur primaire de réduction des NOₓ comprend au moins un atome sélectionné parmi le groupe constitué de Ce, Nd, Pt, Pd, Cu, W, Pr, Sc, Ga, Ru, Mo, Ni, Ti, Rh, Mg, Ca, La, Eu, Y, Yb, Si et des mélanges de ceux-ci.

22. Procédé suivant la revendication 12, dans lequel le catalyseur primaire de réduction des NOₓ est un revêtement déposé dans des conditions contrôlées.

23. Procédé suivant la revendication 22, dans lequel le revêtement catalyseur primaire de réduction des NOₓ, après avoir été déposé, est soumis à au moins une étape de traitement sélectionnée parmi le groupe constitué d'une étape de chauffage à une température supérieure à 200°C, d'une étape de lavage, d'une étape de soufflage de gaz, d'une étape de contrôle de l'efficacité du revêtement, d'une étape de contrôle des propriétés du revêtement, d'une étape de contrôle des caractéristiques du revêtement et de combinaisons de ceux-ci.

24. Procédé suivant la revendication 1, dans lequel un moyen détermine au moins grossièrement la teneur en NOₓ des gaz de combustion à différents moments et dans lequel ledit moyen contrôle le traitement du catalyseur primaire de réduction des NOₓ lorsque la teneur déterminée en NOₓ est supérieure à une valeur de seuil.

25. Procédé suivant la revendication 1, dans lequel un moyen détermine au moins grossièrement la teneur en NOₓ des gaz de combustion à différents moments et dans lequel ledit moyen arrête le traitement du catalyseur primaire de réduction des NOₓ lorsque la teneur déterminée en NOₓ est inférieure à une valeur de seuil.

26. Procédé suivant la revendication 12, dans lequel le catalyseur primaire de réduction des NOₓ forme un revêtement ayant des caractéristiques sensiblement uniformes.

27. Procédé suivant la revendication 12, dans lequel le traitement du revêtement catalyseur primaire est effectué en mettant ledit revêtement en contact avec un milieu gazeux contenant au moins un additif sélectionné parmi le groupe constitué de composés contenant du cérium, de composés contenant de l'europium, de composés contenant du cérium et de l'europium, de particules contenant du cérium, de particules contenant de l'europium, de particules contenant du cérium et de l'europium, de composés contenant de l'ytterbium, de composés contenant du praséodyme, de composés contenant du cérium et de l'ytterbium, de particules contenant de l'ytterbium, de particules contenant du praséodyme, de particules contenant du cérium et de l'ytterbium, de particules contenant du cérium et du praséodyme, et de mélanges de ceux-ci, ledit traitement par contact étant effectué au moins partiellement à une température supérieure à 400°C.

28. Procédé suivant la revendication 12, dans lequel un composé sélectionné parmi le groupe constitué de composés contenant du cérium, de composés contenant de l'europium, de composés contenant du cérium et de l'europium, de composés contenant de l'ytterbium, de composés contenant du praséodyme, de composés contenant du cérium et de l'ytterbium, de composés contenant du cérium et du praséodyme et de mélanges de ceux-ci est mis en contact avec un milieu gazeux contenant au moins de la vapeur d'eau de façon à former un milieu gazeux contenant au moins un élément sélectionné parmi le groupe constitué du cérium, de l'europium et de mélanges de ceux-ci, ledit milieu gazeux étant conduit dans la chambre de combustion.

29. Procédé suivant la revendication 12, dans lequel un composé sélectionné parmi le groupe constitué de composés contenant du cérium, de composés contenant de l'europium, de composés contenant du cérium et de l'europium, de composés contenant de l'ytterbium, de composés contenant du praséodyme, de composés contenant du cérium et de l'ytterbium, de composés contenant du cérium et du praséodyme et de mélanges de ceux-ci est mis en contact avec un milieu gazeux contenant au moins de la vapeur d'eau de façon à former un milieu gazeux contenant au moins un élément sélectionné parmi le groupe constitué du cérium, de l'europium, de l'ytterbium, du praséodyme et de mélanges de ceux-ci, ledit milieu gazeux comprenant au moins un atome sélectionné parmi le groupe constitué du cérium, de l'europium, de l'ytterbium, du praséodyme et des mélanges de ceux-ci étant formé dans la chambre de combustion.

30. Procédé suivant la revendication 12, dans lequel un composé sélectionné parmi le groupe constitué de composés contenant du cérium, de composés contenant de l'europium, de composés contenant du cérium et de l'europium, de composés contenant de l'ytterbium, de composés contenant du praséodyme, de composés contenant du cérium et de l'ytterbium, de composés contenant du cérium et du praséodyme et de mélanges de ceux-ci est mis en contact avec un milieu gazeux contenant au moins de la vapeur d'eau ayant une température comprise entre 20°C et 90°C, de façon à former un milieu gazeux contenant au moins un élément sélectionné parmi le groupe constitué du cérium, de l'europium, de l'ytterbium, du praséodyme, du néodyme et de mélanges de ceux-ci, ledit milieu gazeux étant alors conduit dans la chambre de combustion.

31. Procédé suivant la revendication 12, dans lequel un composé sélectionné parmi le groupe constitué de composés contenant du cérium, de composés contenant de l'europium, de composés contenant du cérium et de l'europium, de composés contenant de l'ytterbium, de composés contenant du praséodyme, de composés contenant du cérium et de l'ytterbium, de composés contenant du cérium et du praséodyme et de mélanges de ceux-ci est mis en contact avec un milieu aqueux et dans lequel le milieu aqueux contenant au moins un élément sélectionné parmi le groupe constitué du cérium, de l'europium, de l'ytterbium, du praséodyme et de mélanges de ceux-ci est introduit dans la chambre de combustion pour former un milieu gazeux de vapeur d'eau pour le traitement du catalyseur primaire de réduction des NOₓ.

32. Procédé suivant la revendication 12, dans lequel le traitement du catalyseur primaire de réduction des NOₓ est en outre contrôlé en fonction d'au moins un paramètre sélectionné parmi le groupe constitué de la charge du moteur à combustion, du débit de combustible, du débit d'air, de la vitesse du moteur à combustion, du mélange air/combustible, du niveau de variation de vitesse, du changement de vitesse, de la température, de l'accélération, du freinage et de combinaisons de ceux-ci.

33. Procédé suivant la revendication 12, dans lequel un milieu aqueux essentiellement exempt de cérium et d'europium et d'ytterbium et de praséodyme et de néodyme est admis dans la chambre de combustion entre deux admissions dans la chambre de combustion d'un milieu aqueux comprenant au moins un atome sélectionné parmi le groupe constitué du cérium, de l'europium, de l'ytterbium, du néodyme, du praséodyme et de mélanges de ceux-ci.

34. Procédé suivant la revendication 12, dans lequel un milieu essentiellement exempt de cérium et d'europium sélectionné parmi le groupe constitué d'un milieu aqueux, d'un milieu à base d'alcool, d'un milieu à base de glycol et de combinaisons de ceux-ci est admis dans la chambre de combustion entre deux admissions dans la chambre de combustion d'un milieu sélectionné parmi le groupe constitué de vapeur d'eau contenant du cérium, de vapeur d'eau contenant de l'europium, d'eau contenant du cérium, d'eau contenant de l'europium, d'un milieu à base d'alcool contenant du cérium, d'un milieu à base d'alcool contenant de l'europium, d'un milieu à base de glycol contenant du cérium, d'un milieu à base de glycol contenant de l'europium, de vapeur d'eau contenant de l'ytterbium, de vapeur d'eau contenant du praséodyme, d'eau contenant de l'ytterbium, d'eau contenant du praséodyme, d'un milieu à base d'alcool contenant de l'ytterbium, d'un milieu à base d'alcool contenant du praséodyme, d'un milieu à base de glycol contenant de l'ytterbium, d'un milieu à base de glycol contenant du praséodyme, d'un milieu contenant du néodyme, et de combinaisons de ceux-ci.

35. Procédé suivant la revendication 12, dans lequel la chambre de combustion est une chambre de combustion d'un moteur à combustion interne.

36. Procédé suivant la revendication 12, dans lequel la combustion est effectuée en présence d'au moins un composé sélectionné parmi le groupe constitué de la vapeur d'eau, du glycol, d'alcool, d'un aldéhyde, d'un acide organique et de mélanges de ceux-ci.

37. Procédé suivant la revendication 36, dans lequel la combustion est effectuée en présence d'au moins un composé sélectionné parmi le groupe constitué de l'eau, de la vapeur d'eau, du glycol, de l'alcool, d'un aldéhyde, d'un acide organique et de mélanges de ceux-ci, ledit composé étant injecté directement dans la chambre de combustion.

38. Procédé suivant la revendication 36, dans lequel la combustion est effectuée en présence de nanoparticules d'un silicate hydraté d'aluminium, le rapport en poids (composé contenant des terres rares)/(silicate hydraté d'aluminium) étant inférieur à 50.

39. Procédé suivant la revendication 12, dans lequel la chambre de combustion est équipée d'un catalyseur de réduction des NOₓ et dans lequel les gaz de combustion sont au moins traités dans un collecteur de suies, la régénération ou réactivation du catalyseur de réduction des NOₓ de la chambre de combustion étant effectuée de façon à ne pas induire la régénération ou réactivation du collecteur de suies et la régénération ou réactivation du collecteur de suies étant effectuée de manière intermittente lorsque cela est nécessaire.

40. Procédé suivant la revendication 12, dans lequel la chambre de combustion est équipée d'un catalyseur de réduction des NOₓ et dans lequel les gaz de combustion sont au moins traités dans un collecteur de suies, la régénération ou réactivation du catalyseur de réduction des NOₓ de la chambre de combustion étant effectuée de façon à ne pas induire la régénération ou réactivation du collecteur de suies, la régénération ou réactivation du collecteur de suies étant effectuée lorsque le catalyseur de réduction des NOₓ de la chambre de combustion a été régénéré ou est régénéré ou sans induire de régénération ou réactivation du catalyseur de réduction des NOₓ, de préférence sensiblement immédiatement après une étape de régénération ou réactivation du catalyseur de réduction des NOₓ.

41. Procédé suivant la revendication 1, dans lequel la chambre de combustion est équipée d'un catalyseur de réduction des NOₓ et dans lequel les gaz de combustion sont au moins traités dans un collecteur de suies, la régénération ou réactivation du catalyseur de réduction des NOₓ de la chambre de combustion étant effectuée de façon à ne pas abaisser la température d'allumage de la suie dans le collecteur de suies à une température inférieure d'au plus 50°C, de manière avantageuse d'au plus 30°C, à la température d'allumage de la suie dans le système de piégeage lorsqu'aucun ou essentiellement aucune composition contenant au moins un atome sélectionné parmi le groupe constitué du cérium, de l'europium, de l'ytterbium, du praséodyme, du néodyme et de mélanges de ceux-ci n'est admise.

42. Procédé suivant la revendication 1, dans lequel la chambre de combustion est équipée d'un catalyseur de réduction des NOₓ et dans lequel les gaz de combustion sont au moins traités dans un collecteur de suies, la régénération ou réactivation du collecteur de suies étant effectuée de façon à abaisser la température d'allumage de la suie dans le collecteur de suies à une température d'au moins 50°C, de manière avantageuse d'au moins 100°C, inférieure à la température d'allumage de la suie dans le système de piégeage lorsqu'aucune ou essentiellement aucune composition contenant au moins un atome sélectionné parmi le groupe constitué du cérium, de l'europium, de l'ytterbium, du praséodyme et de mélanges de ceux-ci n'est admise.

43. Procédé suivant la revendication 1, dans lequel la chambre de combustion est équipée d'un catalyseur de réduction des NOₓ et dans lequel les gaz de combustion sont au moins traités dans un collecteur de suies, la régénération ou réactivation du collecteur de suies étant effectuée en mettant les gaz de combustion en contact dans le collecteur de suies avec une composition contenant au moins un atome sélectionné parmi le groupe constitué du cérium, de l'europium, de l'ytterbium, du praséodyme, du néodyme et de mélanges de ceux-ci, durant une période de temps plus courte que la période de temps requise pour initialiser la régénération du collecteur de suies en mettant ledit collecteur de suies en contact avec les gaz de combustion en présence d'une composition contenant au moins un atome sélectionné parmi le groupe constitué du cérium, de l'europium, de l'ytterbium, du praséodyme et de mélanges de ceux-ci.

44. Procédé suivant la revendication 1, dans lequel la chambre de combustion est équipée d'un catalyseur de réduction des NOₓ et dans lequel les gaz de combustion sont au moins traités dans un collecteur de suies, la régénération ou réactivation du collecteur de suies étant effectuée en mettant ledit collecteur de suies en contact les gaz de combustion en présence d'une quantité d'une composition contenant au moins un atome sélectionné parmi le groupe constitué du cérium, de l'europium, de l'ytterbium, du praséodyme, du néodyme et de mélanges de ceux-ci qui est plus grande que la quantité de la composition contenant au moins un atome sélectionné parmi le groupe constitué du cérium, de l'europium, de l'ytterbium, du praséodyme et de mélanges de ceux-ci qui est requise pour régénérer ou réactiver le catalyseur de réduction des NOₓ de la chambre de combustion.

45. Procédé suivant la revendication 1, dans lequel la chambre de combustion est équipée d'un catalyseur de réduction des NOₓ et dans lequel les gaz de combustion sont au moins traités dans un collecteur de suies, la régénération ou réactivation du collecteur de suies étant effectuée en mettant le collecteur de suies en contact avec des gaz de combustion ayant une concentration d'au moins un atome sélectionné parmi le groupe constitué du cérium, de l'europium, de l'ytterbium, du praséodyme, du néodyme et de mélanges de ceux-ci qui est plus grande que la concentration d'au moins un atome sélectionné parmi le groupe constitué du cérium, de l'europium, de l'ytterbium, du praséodyme et de mélanges de ceux-ci dans les gaz de combustion qui est requise pour régénérer ou réactiver le catalyseur de réduction des NOₓ de la chambre de combustion.
